(19) **Europäisches Patentamt**
**European Patent Office**
**Office européen des brevets**

(11) **EP 4 229 357 B1**

(12) **FASCICULE DE BREVET EUROPEEN**

(45) Date de publication et mention
de la délivrance du brevet:
**10.12.2025 Bulletin 2025/50**

(21) Numéro de dépôt: **21789753.7**

(22) Date de dépôt: **08.10.2021**

(51) Classification Internationale des Brevets (IPC):
**G01C 19/574** *(2012.01)*

(52) Classification Coopérative des Brevets (CPC):
**G01C 19/574**

(86) Numéro de dépôt international:
**PCT/EP2021/077960**

(87) Numéro de publication internationale:
**WO 2022/078917 (21.04.2022 Gazette 2022/16)**

(54) **PROCEDE DE CALIBRATION DE L'ECART DE RAIDEUR ET/OU DE LA QUADRATURE D'UN CAPTEUR INERTIEL VIBRANT**

VERFAHREN ZUR KALIBRIERUNG DER STEIFIGKEITS- UND/ODER QUADRATURDIFFERENZ EINES VIBRIERENDEN INERTIALSENSORS

METHOD FOR CALIBRATING THE DIFFERENCE IN STIFFNESS AND/OR QUADRATURE OF A VIBRATING INERTIAL SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2020 FR 2010492**

(43) Date de publication de la demande:
**23.08.2023 Bulletin 2023/34**

(73) Titulaire: **THALES**
**92190 Meudon (FR)**

(72) Inventeurs:
• **VERCIER, Nicolas**
**26027 Valence Cedex (FR)**
• **MARTIN, Nicolas**
**26027 Valence Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 2 960 625     US-A1- 2018 245 946**

• VERCIER N ET AL: "A new Silicon axisymmetric Gyroscope for Aerospace Applications", 2020 DGON INERTIAL SENSORS AND SYSTEMS (ISS), IEEE, 15 September 2020 (2020-09-15), pages 1 - 18, XP033852392, DOI: 10.1109/ ISS50053.2020.9244886

EP 4 229 357 B1

**Description**

**DOMAINE TECHNIQUE DE L'INVENTION**

Le domaine de l'invention est celui des capteurs inertiels vibrants dans lesquels au moins deux masses sont mises en vibration, voire une seule masse comportant au moins deux parties, une masse ou une partie de masse étant apte à se déformer par rapport à l'autre. L'invention concerne de tels capteurs inertiels vibrant à au moins une masse, comprenant au moins un transducteur de correction de raideur (dit « trimming » de raideur) et au moins un transducteur de correction de quadrature (dit « trimming » de quadrature). Sans que cela soit limitatif, l'invention concerne notamment des capteurs inertiels de type MEMs pouvant présenter une structure plane, par exemple des capteurs micro usinés dans une plaque de support. L'invention concerne plus spécifiquement un procédé de calibration de l'écart de raideur et/ou de la quadrature d'un capteur inertiel vibrant.

**ETAT DE LA TECHNIQUE**

Les capteurs inertiels vibrants (ou à diapason) sont connus de l'homme de l'art. Un capteur inertiel vibrant comprend un résonateur, qui peut être axisymétrique, mais pas nécessairement, associé à des moyens de mise en vibration du résonateur et à des moyens de détection d'une orientation de la vibration (onde de vibration) par rapport à un repère du capteur. Ces moyens comprennent généralement au moins deux groupes d'actionneurs solidaires du boîtier du capteur et/ou du résonateur et au moins deux groupes de détecteurs également solidaires du boîtier et/ou du résonateur.

Par souci de simplification, un capteur inertiel vibrant peut être désigné indifféremment dans l'ensemble de la présente description par « capteur inertiel », ou « capteur angulaire », voire « capteur ».

Un tel capteur est disposé sur un porteur afin de mesurer les valeurs d'angle et/ou de vitesse angulaire dudit porteur. Le porteur peut être tout ou partie d'un avion, d'un bateau, d'un train ou de tout autre véhicule aérien, terrestre ou maritime.

Il existe notamment des capteurs inertiel micro-usinés dans une plaque mince plane, permettant la mesure d'une position angulaire (gyroscope) ou d'une vitesse angulaire (gyromètres), qui sont notamment décrits dans le document EP2960625. On en rappelle ci-dessous les principales caractéristiques.

La fabrication de ces capteurs micro-usinés, dits encore capteurs MEMS (Micro-Electro-Mechanical-Systems), utilise des techniques de micro-usinage collectif, gravure, dépôts dopage, etc., semblables à celles qui sont utilisées pour la fabrication de circuits intégrés électroniques, permettant des faibles coûts de production.

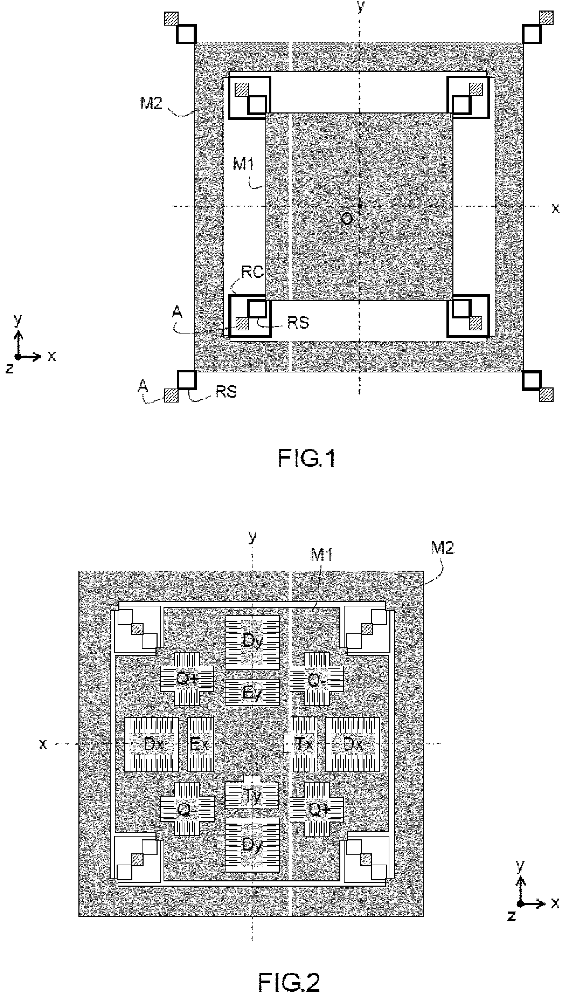

Les capteurs MEMS décrits dans la demande EP2960625 sont constitués de deux masses mobiles vibrantes M1 et M2 illustrées en figure 1 disposées l'une autour de l'autre (concentriques) et excitées en vibration en mode diapason dans le plan de la plaque (plan xy sur la figure 1) via un ou plusieurs transducteurs d'excitation. Les deux masses sont suspendues à des points d'ancrage fixes A de la plaque par des ressorts de suspension RS. Les deux masses sont couplées entre elles par des éléments de raideurs RC. On vise à obtenir par construction une raideur selon x égale à une raideur selon y et une raideur de couplage entre x et y nulle. Le mode de vibration utile correspond à une vibration linéaire des deux masses en opposition de phase.

Plus généralement, il peut s'agir de plus de deux masses mobiles, par exemple de quatre masses mobiles, ou à l'inverse d'une seule masse comportant au moins deux parties, l'une étant apte à se déformer par rapport à l'autre, par exemple sur un micro gyromètre résonnant hémisphérique ($\mu$GRH).

La structure décrite dans la demande EP2960625 forme un système résonnant (dit « résonateur ») à deux masses couplées entre elles par l'accélération de Coriolis. Lorsque le capteur tourne autour de l'axe z perpendiculaire au plan xy, l'axe z étant dénommé « axe sensible », la composition de la vibration forcée avec le vecteur de rotation angulaire engendre, par effet Coriolis, des forces qui mettent les masses mobiles en vibration naturelle perpendiculairement à la vibration d'excitation et à l'axe sensible ; l'amplitude de la vibration naturelle est proportionnelle à la vitesse de rotation. L'électronique associée au capteur calcule l'amplitude de la vibration selon la direction orthogonale à la direction d'excitation quelle que soit celle-ci (connue par hypothèse).

Le capteur peut fonctionner en mode gyromètre : la direction d'excitation est maintenue fixe en modifiant l'excitation, et par conséquent l'axe perpendiculaire à cette vibration est maintenue fixe par rapport au boîtier du capteur et l'information de sortie est alors une image de l'énergie nécessaire qu'il faut appliquer aux transducteurs d'excitation pour maintenir fixe la direction de vibration naturelle malgré les mouvements du boîtier. La mesure de cette contre force donne accès à la vitesse angulaire $\Omega$ du capteur.

Le capteur peut aussi fonctionner en mode gyroscope : la direction de la vibration d'excitation est laissée libre et est détectée pour donner l'orientation angulaire du capteur. On peut également déduire la vitesse angulaire du capteur en dérivant la mesure d'angle.

Le terme « orientation angulaire » peut être simplement nommé « angle ».

L'ensemble de la structure du résonateur décrite dans la demande EP2960625 est axisymétrique autour de deux axes x et y définissant un repère capteur tel qu'illustré en figure 1. On entend par axisymétrique que la structure est symétrique par rapport à x et symétrique par rapport à y. Mais il faut comprendre que cette définition peut couvrir toutes les dissymétries mineures possibles. Comme décrit ci-dessous ces axes constituent les directions principales des actionneurs/détecteurs, qui opèrent selon ces deux axes.

Pour exciter le mode de vibration utile dans une direction donnée quelconque du plan, on décompose le signal d'excitation en deux composantes d'amplitudes respectives ajustées, appliquées respectivement au transducteur d'excitation Ex agissant selon la direction x et au transducteur d'excitation Ey agissant selon la direction y associés à au moins une masse mobile (masse interne M1 sur la figure 2). On applique donc à ces transducteurs des forces d'excitation pour générer et entretenir l'onde vibrante : ils sont aptes à entretenir la vibration forcée via une commande d'amplitude Ca (lutter contre l'amortissement du capteur) et selon n'importe quelle direction du plan xy, via une commande de précession Cp (faire tourner l'onde).

On détecte les mouvements de l'onde résultante en combinant l'information recueillie par au moins une paire de transducteurs de détection Dx, Dy récupérant la position de la masse dans sa course dans le repère capteur xy (deux paires sur la figure 2) et associés à au moins une masse mobile.

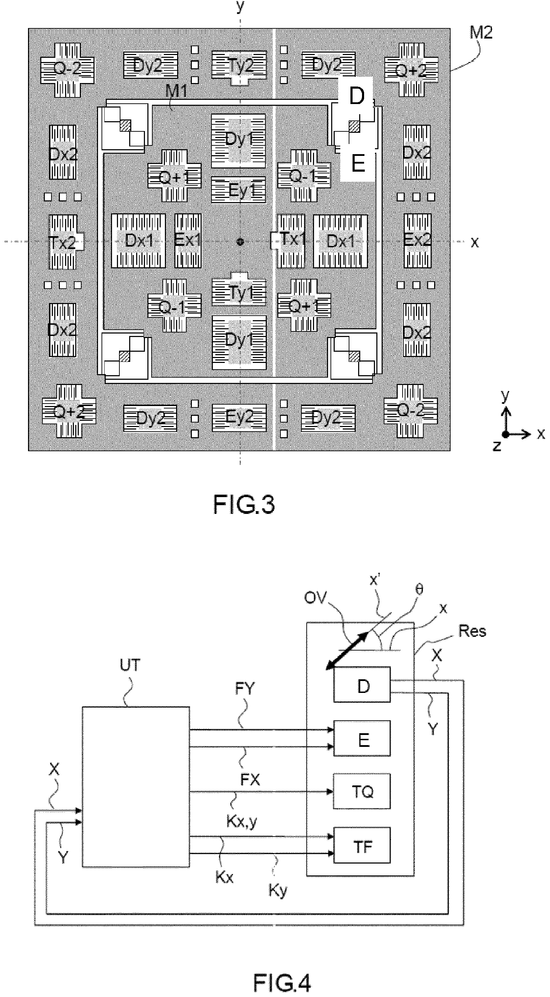

Préférentiellement on peut réaliser des transducteurs sur les deux masses, tel qu'illustré en figure 3, l'indice 1 correspondant à la masse M1 et l'indice 2 à la masse M2. Les figures 2 et 3 constituent des exemples d'agencement non limitatifs, beaucoup d'autres types d'agencement sont possibles, qui ne sont d'ailleurs pas nécessairement axisymétriques.

Les transducteurs sont préférentiellement réalisés par des électrodes en peigne interdigités à variation d'entrefer. Il y a un peigne fixe dont les dents sont solidaires d'une masse fixe de la plaque usinée et un peigne mobile dont les dents, interdigitées avec les dents du peigne fixe, sont solidaires de la masse mobile associée au transducteur considéré.

L'excitation consiste à appliquer une force d'excitation via une tension alternative entre le peigne mobile et le peigne fixe, à la fréquence de vibration souhaitée (fréquence de résonance mécanique de la masse mobile suspendue, typiquement de l'ordre de quelques KHz). Le mouvement engendré est perpendiculaire aux dents du peigne.

La détection consiste à appliquer une tension de polarisation entre le peigne fixe et le peigne mobile et à observer les variations de charge qui résultent des variations de capacité entre le peigne fixe et le peigne mobile dues aux variations d'espacement entre les dents du peigne fixe et du peigne mobile. Le mouvement mesuré est le mouvement perpendiculaire aux dents du peigne. Alternativement, dans une autre configuration, on peut mesurer le mouvement longitudinal aux dents des peignes.

L'ensemble vibrant masses/ressorts est caractérisé par une matrice de raideur symétrique 2x2 dénommée K. Pour un fonctionnement optimal du capteur, on cherche à obtenir une matrice de raideur finale proportionnelle à une matrice identité. Du fait des imperfections de réalisation, ce n'est généralement pas le cas (voir plus loin).

On dénomme axe x' l'axe de vibration de l'onde. Cet axe définit un repère x'y', avec y' perpendiculaire à x' dans le plan du capteur. L'axe x' fait avec l'axe x un angle θ dénommé « angle électrique » et le repère x'y' est dénommé « repère onde ».

On supposera pour l'instant que l'onde vibre selon x (x'=x).

L'équation dynamique décrivant un capteur inertiel vibrant peut se ramener à une modèle mono-masse de masse M, dont le déplacement X, Y est modélisé comme suit :

$$[\text{Math.1}]$$

$$M \begin{bmatrix} \ddot{X} \\ \ddot{Y} \end{bmatrix} + A \begin{bmatrix} \dot{X} \\ \dot{Y} \end{bmatrix} + K \begin{bmatrix} X \\ Y \end{bmatrix} + C \begin{bmatrix} \dot{X} \\ \dot{Y} \end{bmatrix} = \begin{bmatrix} FX \\ FY \end{bmatrix}$$

où M est la matrice de masse, et pour simplifier dans la suite on va considérer que c'est un scalaire, A est la matrice d'amortissement et K est la matrice de raideur et C est la matrice de Coriolis.

La matrice de Coriolis C vaut :

$$[\text{Math.2}]$$

$$\begin{bmatrix} 0 & -M\Omega \\ M\Omega & 0 \end{bmatrix}$$

où M est la masse et $\Omega$ est la vitesse angulaire du capteur.

FX et FY sont les forces d'excitation appliquées suivant l'axe x et l'axe y du capteur. Ces forces sont issues de commandes Cr, Ca, Cq et Cp calculées dans le repère onde par des asservissements connus de l'homme de l'art, à partir de la démodulation des signaux détectés relatifs au déplacement de la vibration. A partir des mesures du mouvement de l'onde X et Y réalisés dans le repère xy, on applique une rotation pour passer dans le repère onde x'y', puis les commandes sont déterminées (via une démodulation de signaux détectés) et on réapplique une rotation inverse pour repasser dans le repère capteur xy, dans lequel sont appliquées les forces d'excitation. Les commandes sont déterminées de sorte que le déplacement de la masse, c'est-à-dire l'onde de vibration du capteur, prenne une forme voulue. idéalement, la forme souhaitée de l'onde est un déplacement linéaire oscillant dans une direction donnée par rapport au repère xy du capteur. Mais l'onde est généralement de forme elliptique, sensiblement plate selon la direction perpendiculaire à la direction donnée (en d'autres termes le petit axe de l'ellipse est très faible relativement au grand axe, lequel grand axe correspond à la direction donnée).

La commande Cr correspond aux forces de raideur pour contrôler la fréquence propre du résonateur, la phase étant égale à l'intégrale de la fréquence : Cr contrôle donc la phase de l'onde. Cr est une force externe appliquée au résonateur (en estimant le déplacement) qui modifie la fréquence de la vibration, en ralentissant ou accélérant la vibration lorsque celle-ci vibre, mais ne modifie pas la raideur intrinsèque du résonateur.

La commande Ca correspond aux forces d'amplitude pour compenser l'effet des forces d'amortissement du capteur et maintenir constante l'amplitude de la vibration : elle permet donc de contrôler l'amplitude de l'onde.

La commande Cp correspond aux forces de précession qui permettent de contrôler la vitesse angulaire de l'onde. Dans le cas d'un capteur fonctionnant en mode gyromètre, une commande de précession Cp est appliquée de sorte à asservir l'orientation de la vibration (ou angle électrique) à une valeur de consigne constante.

La commande Cq correspond aux forces de quadrature pour contrôler la quadrature de l'onde, c'est-à-dire pour garantir la linéarité de l'onde ou, quand l'onde est elliptique, pour contrôler le petit axe de l'ellipse.

Il est bien connu de l'homme de l'art, notamment décrit dans la publication *« Capteurs résonants M/NEMS et phénomènes non linéaires » (Najib Kacem et al. Acoustique et techniques n°57),* que les imperfections de réalisation du capteur, notamment les dissymétries de masse ou les non-linéarités d'origine mécaniques ou électrostatiques de celui-ci, conduisent à des erreurs sur les informations délivrées en sortie de celui-ci. La plupart de ces imperfections doivent être compensées par un équilibrage du capteur inertiel vibrant.

Il est connu de réaliser cette compensation en enlevant localement de la matière, par exemple par ablation laser pour modifier la répartition de masse ou de raideur. Cette méthode est coûteuse voire impossible à mettre en œuvre sur un capteur micro-usiné dans une plaque mince de silicium, dont les mouvements de détection et d'excitation sont situés dans le plan du substrat.

Un premier type d'imperfection à l'origine de la non identité de la matrice de raideur K est l'écart de raideur entre l'axe principal de vibration et l'axe perpendiculaire à la vibration dans le plan du capteur, correspondant à une matrice de raideur du système dans laquelle la raideur selon l'axe x est différente de la raideur selon l'axe y. On cherche à égaliser les raideurs selon les deux axes précités au moyen d'une raideur électrostatique ajustable. Cette raideur électrostatique, dite raideur d'égalisation, est délivrée par des transducteurs d'ajustement de la raideur Tx, Ty (au moins une paire Tx/Ty sur au moins une masse, comme illustré en figure 2) agissant selon les directions x et y. Son application a pour but d'égaliser les raideurs selon les deux axes de la vibration, en réduisant la valeur de la raideur la plus élevée, rendant ainsi les raideurs égales. La correction de raideur est dénommée « trimming » de raideur en anglais.

Un deuxième type d'imperfection provient du couplage mécanique entre l'axe de la vibration et l'axe perpendiculaire, à l'origine du biais dit en quadrature. Il s'agit des défauts d'anisotropie de raideur dynamique de l'ensemble des deux masses vibrantes (ou des deux parties d'une masse), se traduisant par une vibration non plus linéaire mais elliptique, et correspondant à l'existence d'une raideur de couplage non nulle. Une solution connue de l'état de la technique est d'annuler ce terme en appliquant sur le système une force F (sinusoïdale) via les transducteurs d'excitation. Le problème est que l'application de cette force n'est pas exercée exactement au bon moment (erreurs de phase) et dans le bon axe (erreur de gain), engendrant des dérives. Pour éviter d'appliquer une force F on vient physiquement annuler le terme de couplage non pas en appliquant une force mais en changeant directement la raideur du résonateur via au moins une paire de transducteurs Q+ et Q- tel qu'illustré figure 2 (2 paires Q+/Q- sur la figure 2). Ces transducteurs opérant sur les axes x et y sont disposés sur les diagonales pour respecter la symétrie, et pour des raisons d'encombrement. La correction de quadrature est dénommée « trimming » (également « trim ») de quadrature. Les transducteurs Tx, Ty, Q+ et Q- sont préférentiellement également des peignes interdigités comme illustré en figures 2 et 3, commandés par des tensions continues et dénommés peignes de trimming.

Ainsi les transducteurs du « trim » de quadrature modifient les caractéristiques du capteur MEMs pour supprimer les couplages entre les deux axes du repère capteur et les transducteurs du « trim » de raideur modifient les caractéristiques du capteur MEMs pour supprimer les écarts de raideur entre les deux axes du repère capteur. Ils modifient les caractéristiques intrinsèques du résonateur. Autrement dit, si on joue sur la tension de trimming même lorsque le résonateur ne vibre pas, on change sa raideur, contrairement à la commande Cr décrite ci-dessus qui est une force qui vient ralentir ou accélérer la vibration lorsque celle-ci vibre.

Les transducteurs de trimming sont commandés par des asservissements de trim (connus de l'homme de l'art, et notamment dans la publication « *Quadrature-Error Compensation and Corresponding Effects on the Performance of Fully Decoupled MEMS Gyroscopes* » (Erdinc Tatar et al. Journal of Microelectromechanical Systems, vol. 21, no. 3, June 20), qui génèrent une commande de trim de quadrature CTq, une commande de trim de raideur selon x CTx et une commande de trim de raideur selon y CTy. Les commandes des trim sont des tensions continues.

Ainsi, via les peignes de trimming, on modifie directement la matrice de raideur K à l'aide d'une matrice Kt, et l'équation dynamique du capteur inertiel vibrant est :

[Math.3]

$$M\begin{bmatrix}\ddot{X}\\\ddot{Y}\end{bmatrix} + A\begin{bmatrix}\dot{X}\\\dot{Y}\end{bmatrix} + K\begin{bmatrix}X\\Y\end{bmatrix} + C\begin{bmatrix}\dot{X}\\\dot{Y}\end{bmatrix} - Kt\begin{bmatrix}X\\Y\end{bmatrix} = \begin{bmatrix}FX\\FY\end{bmatrix}$$

Le peigne de trimming de raideur selon x modifie la raideur du résonateur en engendrant une matrice Kt:

[Math.4]

$$Kt = \begin{bmatrix}Kx & 0\\0 & 0\end{bmatrix}$$

Le peigne de trimming de raideur selon y modifie la raideur du résonateur en engendrant une matrice Kt :

[Math.5]

$$Kt = \begin{bmatrix}0 & 0\\0 & Ky\end{bmatrix}$$

Le peigne de trimming de quadrature modifie la raideur du résonateur en engendrant une matrice Kt :

[Math.6]

$$Kt = \begin{bmatrix}0 & Kxy\\Kxy & 0\end{bmatrix}$$

Les raideurs Kx, Ky et Kxy correspondent aux commandes CTx, CTy et CTq (tensions continues) à un facteur de gain près. Les commandes CTx, CTy et CTq sont des tensions qui, à travers les peignes, modifient les raideurs Kx, Ky et Kxy. Appliquer des commandes de trimming revient à modifier la matrice K dans l'équation différentielle Math.1 en transformant K en K-Kt.

La figure 4 illustre le fonctionnement général d'un capteur inertiel selon l'état de l'art. Le résonateur Res comprend les différents transducteurs décrits ci-dessus et symbolisés par E (excitation), D (détection), TQ (trim quadrature) et TF (trim raideur). L'onde de vibration OV vibre selon x' avec un angle électrique □. Une unité de traitement UT procède aux différents calculs pour les asservissements et génère, pour les corrections, l'ensemble des commandes/forces précitées Cr, Ca, Cq et Cp aux différents transducteurs. Comme expliqué plus après, les commandes d'excitation et de trimming sont déterminées par des asservissements différents.

Dans l'unité de traitement, les mouvements détectés X et Y dans le repère capteur sont d'abord transformés dans le repère onde x'y' par une rotation selon l'angle électrique θ puis les commandes d'excitation sont déterminées dans le repère onde par des asservissements sous la forme de tensions électriques U'x et U'y avec, par exemple :

[Math.7]

$$U'_x = iC_a + C_r \;;$$

et

[Math.8]

$$U'_y = iC_p + C_q$$

Outre les asservissements sur l'excitation, on met en œuvre un premier et un deuxième asservissement respectivement pour les commandes de trimming de raideur CTx, CTy et de quadrature CTq qui sont ainsi déterminées par des asservissements dédiés.

Toutes les commandes sont ensuite rebasculées dans le repère capteur xy par une rotation inverse puis appliquées (à un facteur de gain près) dans ce repère capteur aux différents transducteurs.

Vercier N et al : « A new silicon axisymetric Gyroscope for Aerospace Applications », 2020 DGON inertial sensors and systems (ISS), IEEE (2020) divulgue que les erreurs de vitesse angulaire sont corrigées par une rotation de l'onde et que les erreurs de raideur et de quadrature sont corrigées par le trimming. Un problème est que des résidus d'écart de raideur Kx-Ky appelés aussi $\Delta$K et des résidus de quadrature Kxy subsistent, malgré les commandes de trimming de raideur et de quadrature appliquées pour contrer les erreurs détectées. En outre, les commandes de trimming de raideur et de quadrature peuvent générer elles-mêmes un écart de raideur et de la quadrature, même s'ils sont moindres que l'écart qu'on cherche à annuler. Notamment, les transducteurs de trimming, qui sont préférentiellement également des peignes interdigités, induisent eux-mêmes des non-linéarités électrostatiques induisant des erreurs sur la matrice de raideur, même si ces erreurs sont moins importantes que les erreurs de raideur d'origine mécanique que ces transducteurs viennent corriger.

Ainsi, lorsqu'on souhaite corriger un écart de raideur $\Delta$K en appliquant une commande de trimming de -$\Delta$K, il subsiste un résidu $\varepsilon_1$K d'écart de raideur qui peut être apporté par le trimming lui-même. Si l'on souhaite prendre en compte cet écart, il faut le connaître. Il peut, après correction de $\varepsilon_1$K, subsister un nouveau résidu $\varepsilon_2$K à nouveau induit par la correction qui peut devenir négligeable ou du moins acceptable, où

$$[\text{Math.9}]$$

$$\Delta K \gg \mathcal{E}_1 K \gg \mathcal{E}_2 K$$

Le problème est le même lorsqu'on souhaite corriger la quadrature en appliquant une commande de trimming -Kxy, il subsiste un résidu $\varepsilon_1$Kxy de quadrature qui peut être apporté par le trimming lui-même. Il peut subsister, après correction de $\varepsilon_1$Kxy, un nouveau résidu $\varepsilon_2$Kxy à nouveau induit par la correction qui peut devenir négligeable ou du moins acceptable, où

$$[\text{Math.10}]$$

$$Kxy \gg \mathcal{E}_1 Kxy \gg \mathcal{E}_2 Kxy$$

Or, sur un capteur inertiel vibrant, l'écart de raideur et la quadrature, couplés aux erreurs de phase, peuvent engendrer de la dérive sur le capteur. Il est rappelé ici que les erreurs de phase en excitation concernent les erreurs qui existent entre les forces estimées par les asservissements d'excitation et les forces réellement appliquées au résonateur (matrice d'excitation représentative de l'effet de la chaine d'excitation non parfaite). De même, les erreurs de phase en détection concernent les erreurs qui existent entre les déplacements réels du résonateur et les déplacements estimés (matrice de détection représentative de l'effet de la chaine de détection non parfaite).

Le problème général de l'invention est de réduire au maximum l'écart de raideur et la quadrature d'un capteur inertiel vibrant afin de diminuer le plus possible la dérive du capteur.

Les solutions connues utilisent généralement des techniques de trimming intrusives pour aller chercher l'écart de raideur (ou la quadrature), notamment en envoyant des perturbations. Par exemple, la demande de brevet US20060020409A1 décrit une méthode d'identification des écarts de raideur nécessitant d'envoyer des perturbations pour les mesurer. Plus précisément, le principe décrit est d'envoyer une perturbation sinusoïdale sur la boucle de quadrature qui, couplée avec l'écart de raideur, génère une précession de l'onde. A l'aide d'une boucle, on cherche à annuler l'impact de la perturbation sur la précession de l'onde en diminuant l'amplitude de la perturbation se retrouvant sur la précession, ce qui permet de remonter à l'écart de raideur. Cependant, une telle méthode crée une perturbation sur le signal utile, souvent à l'intérieur de la bande passante d'intérêt. Ainsi, elle génère des raies résiduelles aux fréquences envoyées, et cela forme donc un signal parasite. Par ailleurs, la méthode exploite une boucle avec une tension asservie, ce qui la rend sensible aux erreurs de phase et augmente le bruit.

L'invention vise à surmonter les inconvénients précités de l'art antérieur.

Plus particulièrement elle vise à disposer d'une méthode pour identifier l'écart de raideur et la quadrature d'un capteur inertiel vibrant afin de les corriger sur le capteur, et ce, de préférence en temps réel, et sans perturber le capteur avec une perturbation qui pourrait se retrouver sur la mesure délivrée par le capteur.

## EXPOSE DE L'INVENTION

Un premier objet de l'invention permettant de remédier à ces inconvénients est un procédé de calibration de l'écart de raideur $\Delta K$ et/ou de la quadrature Kxy d'un capteur angulaire inertiel vibrant, le capteur inertiel comprenant un résonateur s'étendant autour de deux axes x et y perpendiculaires entre eux définissant un repère capteur xy et comprenant :

- au moins une masse mobile vibrante, ladite au moins une masse mobile comportant au moins deux parties configurées pour vibrer en opposition de phase l'une par rapport à l'autre à une pulsation de vibration $\omega$ et selon une direction x' définissant un repère onde x'y', l'onde de vibration selon x' faisant un angle électrique $\theta$ par rapport à l'axe x ;
- une pluralité de transducteurs électrostatiques commandés par des tensions électriques et opérant selon les deux axes x ou y, dont au moins :

-- une paire de transducteurs de détection configurés pour détecter les mouvements de l'onde de vibration selon les deux axes x et y ;
-- une paire de transducteurs d'excitation auxquels sont appliquées des forces d'excitation respectivement selon les deux axes x et y, via une pluralité de commandes d'excitation déterminées par des asservissements à partir des mouvements détectés, configurés pour maintenir l'onde à une amplitude constante via une commande d'amplitude et, le cas échéant, pour faire tourner ladite onde de vibration via une commande de précession ;
-- une paire de transducteurs de compensation de quadrature, commandés via une commande de quadrature ; et
-- une paire de transducteurs d'ajustement de raideur, commandés via respectivement une commande de raideur selon l'axe x et une commande de raideur selon l'axe y, formant une commande de raideur ;

le résonateur présentant une matrice de raideur $K_C$ dans le repère capteur et une matrice de raideur $K_O$ dans le repère onde ;
le procédé de calibration s'appliquant lorsque le capteur inertiel est en fonctionnement avec une onde de vibration vibrant selon l'axe x',
le procédé de calibration comprenant les étapes consistant à :

- **A** déterminer l'angle électrique $\theta_k$, $\theta(t)$ ;
- **B** récupérer au moins un terme de la matrice de raideur $K_O$ dans le repère onde x'y', pouvant être un terme de quadrature $K_O(2,1)$ ou un terme de raideur $K_O(1,1)$, ledit terme étant sous la forme d'une somme de fonctions en $\cos(i\theta)$ et en $\sin(i\theta)$, i est un nombre entier variant entre 1 et n, n étant supérieur ou égal à 1;

les étapes **A** et **B** étant réitérées soit pour une pluralité d'angles électriques $\theta_k$, où k est un entier variant entre 1 et m, m étant supérieur ou égal à 2, soit pendant une durée T au cours de laquelle l'onde de vibration tourne en continu selon un angle électrique $\theta(t)$ variant en fonction du temps t ; puis

- **C** déterminer les amplitudes des fonctions en $\cos(i\theta)$ et en $\sin(i\theta)$ ; et
- **D** déterminer l'écart de raideur $\Delta K$, respectivement la quadrature Kxy, à partir des amplitudes déterminées.

Le procédé de calibration selon l'invention peut en outre comporter l'une ou plusieurs des caractéristiques suivantes prises isolément ou suivant toutes combinaisons techniques possibles.

Selon un mode de réalisation, l'angle électrique décrit une pluralité d'angles électriques $\theta_k$ où k est un entier variant entre 1 et m, m étant supérieur ou égal à 2, et l'étape **C** de détermination des amplitudes comprend l'application d'un filtre moindres carrés au terme récupéré, la quantité m d'angles électriques $\theta_k$ étant au moins égal au nombre d'amplitudes à déterminer.

Selon un mode de réalisation alternatif, l'onde de vibration tourne en continu selon un angle électrique $\theta(t)$ variant en fonction du temps t pendant une durée T, et l'étape **C** de détermination des amplitudes comprend la démodulation du terme récupéré en $\cos(i\theta)$ et en $\sin(i\theta)$ pour chaque i variant entre 1 et n, de manière à déterminer les amplitudes des fonctions en $\cos(i\theta)$ et en $\sin(i\theta)$; et l'étape **D** de détermination de l'écart de raideur $\Delta K$, respectivement de la quadrature Kxy, est réalisée à partir des amplitudes déterminées.

Selon un mode de réalisation, le capteur inertiel fonctionne en mode gyromètre, l'angle électrique déterminé à l'étape **A** étant égal à un angle imposé via la commande de précession.

Selon un mode de réalisation alternatif, le capteur inertiel fonctionne en mode gyroscope, l'angle électrique résultant d'une rotation du capteur inertiel étant mesuré par ledit capteur inertiel, potentiellement superposé à une commande de précession, l'angle électrique déterminé à l'étape **A** étant égal audit angle de rotation mesuré.

Selon un mode de réalisation, le procédé de calibration comprend en outre une étape complémentaire consistant à :

**E** appliquer une commande de raideur, respectivement une commande de quadrature, à partir de l'écart de raideur ΔK, respectivement à partir de la quadrature Kxy, déterminé à l'étape **D.**

Selon un mode de réalisation particulier, les étapes **A** à **E** sont incluses dans un asservissement en boucle fermée ou sont mises en œuvre en boucle ouverte de manière itérée, de préférence deux fois.

Un deuxième objet de l'invention est un capteur angulaire inertiel comprenant un résonateur s'étendant autour de deux axes x et y perpendiculaires entre eux définissant un repère capteur xy et comprenant :

- au moins une masse mobile vibrante, ladite au moins une masse mobile comportant au moins deux parties configurées pour vibrer en opposition de phase l'une par rapport à l'autre à une pulsation de vibration ω et selon une direction x' définissant un repère onde x'y', l'onde de vibration selon x' faisant un angle électrique θ par rapport à l'axe x ;
- une pluralité de transducteurs électrostatiques commandés par des tensions électriques et opérant selon les deux axes x ou y, dont au moins :

    -- une paire de transducteurs de détection configurés pour détecter les mouvements de l'onde de vibration selon les deux axes x et y ;

    -- une paire de transducteurs d'excitation auxquels sont appliquées des forces d'excitation respectivement selon les deux axes x et y, via une pluralité de commandes d'excitation déterminées par des asservissements à partir des mouvements détectés, configurés pour maintenir l'onde à une amplitude constante via une commande d'amplitude et, le cas échéant, pour faire tourner ladite onde de vibration via une commande de précession ;

    -- une paire de transducteurs de compensation de quadrature, commandés via une commande de quadrature ; et

    -- une paire de transducteurs d'ajustement de raideur, commandés via respectivement une commande de raideur selon l'axe x et une commande de raideur selon l'axe y, formant ainsi une commande de raideur,

le résonateur présentant une matrice de raideur $K_C$ dans le repère capteur et une matrice de raideur $K_O$ dans le repère onde ;

le capteur angulaire inertiel comprenant en outre :

- un moyen de détermination de l'angle électrique $\theta_k$, $\theta(t)$ ;
- un moyen de récupération d'au moins un terme de la matrice de raideur $K_O$ dans le repère onde x'y', pouvant être un terme de quadrature $K_O(2,1)$ ou un terme de raideur $K_O(1,1)$ ; et
- une unité de traitement configurée pour implémenter au moins les étapes **A** à **D** et éventuellement l'étape **E,** du procédé de calibration selon l'invention ;

les transducteurs d'ajustement de raideur, respectivement de compensation de quadrature, étant configurés pour appliquer ladite commande de raideur, respectivement ladite commande de quadrature, au résonateur.

Selon un mode de réalisation particulier, le capteur inertiel est axisymétrique.

Selon un mode de réalisation particulier, pouvant être combiné avec le mode de réalisation particulier précédent, le capteur inertiel comprend au moins deux masses mobiles vibrantes formant les au moins deux parties configurées pour vibrer en opposition de phase l'une par rapport à l'autre. Une masse mobile peut être disposée autour d'une autre masse mobile.

Un troisième objet de l'invention est un procédé de mesure d'une vitesse angulaire ou d'une orientation angulaire d'un porteur sur lequel est disposé un capteur inertiel selon l'invention, le procédé de mesure comprenant :

- la calibration dudit capteur inertiel mettant en œuvre le procédé de calibration selon l'invention ; et
- la mesure de la vitesse angulaire ou de l'orientation angulaire,

le capteur inertiel étant utilisé en mode gyromètre ou en mode gyroscope.

Le procédé de calibration, le capteur inertiel et le procédé de mesure selon l'invention peuvent comporter l'une quelconque des caractéristiques précédemment énoncées, prises isolément ou selon toutes combinaisons techniquement possibles avec d'autres caractéristiques.

La description suivante présente plusieurs exemples de réalisation du dispositif de calibration selon l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

## BREVE DESCRIPTION DES FIGURES

D'autres caractéristiques, détails et avantages de l'invention ressortiront à la lecture de la description faite en référence aux dessins annexés donnés à titre d'exemple et qui représentent, respectivement :

La figure 1 déjà citée illustre le résonateur axisymétrique d'un capteur MEMS selon l'état de l'art, constitué de deux masses mobiles vibrantes disposées l'une autour de l'autre.

La figure 2 déjà citée illustre la structure d'un capteur MEMS selon l'état de l'art avec un résonateur axisymétrique autour de deux axes x et y définissant un repère capteur

La figure 3 déjà citée illustre un capteur MEMS selon l'état de l'art avec des transducteurs sur les deux masses.

La figure 4 déjà citée illustre le fonctionnement d'un capteur inertiel selon l'état de l'art.

La figure 5 illustre un premier mode de réalisation d'un procédé de calibration selon l'invention.

La figure 6 illustre un deuxième mode de réalisation d'un procédé de calibration selon l'invention.

La figure 7 illustre un troisième mode de réalisation d'un procédé de calibration selon l'invention.

La figure 8 illustre un quatrième mode de réalisation d'un procédé de calibration selon l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## DESCRIPTION DETAILLEE DE L'INVENTION

Le procédé de calibration selon l'invention s'applique à un capteur angulaire inertiel comprenant un résonateur Res associé à des moyens de mise en vibration du résonateur et à des moyens de détection d'une orientation de la vibration (onde de vibration) par rapport à un repère du capteur, par exemple des transducteurs d'excitation E, et de détection D commandés par des commandes d'excitation (E), ainsi que des transducteurs de trimming TF et TQ commandés par des commandes de trim (TF, TQ).

L'invention peut s'appliquer notamment à un des capteurs présentés précédemment, en rapport avec les figures 1 à 3, ou à des capteurs selon les variantes également précédemment décrites (au moins une masse ou au moins deux masses, capteur axisymétrique ou non axisymétrique, structure plane ou non plane, le capteur MEMS étant un exemple de réalisation).

En outre, on peut encore se référer au fonctionnement général de la figure 4, l'unité de traitement UT étant configurée pour appliquer les étapes du procédé selon l'invention. Il peut s'agir d'un ou de plusieurs modules ajoutés dans l'UT pour réaliser les étapes du procédé de calibration selon l'invention.

L'onde de vibration OV vibre selon une pulsation de vibration $\omega$. Le procédé de calibration selon l'invention s'applique à un capteur inertiel fonctionnant en mode gyromètre ou en mode gyroscope, les asservissements des commandes d'excitation étant en fonctionnement.

Dans un capteur angulaire inertiel vibrant, notamment axisymétrique, on distingue deux repères : le repère capteur xy dont les axes x et y sont les axes contenant les transducteurs d'excitation et de détection du capteur et le repère onde x'y' dans lequel l'axe x' est l'axe de vibration de l'onde OV et l'axe y' est l'axe perpendiculaire à x' dans le plan du capteur. L'axe x' fait avec l'axe x un angle $\theta$ dénommé « angle électrique » et le repère x'y' est dénommé « repère onde ».

Sur un capteur angulaire inertiel vibrant, une source de dérive vient des erreurs de raideur ou de quadrature multipliées par les erreurs de phase. Il est rappelé qu'une erreur de raideur correspond à un écart de raideur entre l'axe de vibration et l'axe perpendiculaire à la vibration et qu'une erreur de quadrature provient du couplage mécanique entre l'axe de la vibration et l'axe perpendiculaire à la vibration.

Un capteur angulaire inertiel vibrant incluant des transducteurs de trimming possède des actionneurs qui vont permettre de réaliser des corrections de raideur et de quadrature. Cependant, il subsiste des résidus d'écart de raideur $\Delta K$ et/ou des résidus de quadrature Kxy, malgré les commandes de trimming de raideur et de quadrature.

Un objectif de l'invention est de supprimer, du moins de réduire jusqu'à des valeurs acceptables par l'opérateur, l'écart de raideur et la quadrature, de manière à être moins voire plus sensible aux erreurs de phase.

Le procédé de calibration selon l'invention peut être appliqué à un capteur angulaire inertiel fonctionnant en mode gyromètre, ou peut être appliqué à un capteur inertiel fonctionnant en mode gyroscope. Dans le cas d'un gyroscope, chaque angle θ est un angle mesuré ou subi (du fait du changement d'angle du porteur), alors que pour un gyromètre, l'angle θ est imposé par une commande de rotation de l'onde. Que ce soit en mode gyromètre ou en mode gyroscope, le procédé selon l'invention nécessite d'utiliser plusieurs angles θ différents.

Un gyromètre vibrant possède une matrice de raideur présentant la forme suivante $K_C$ en repère capteur (donnée ici sans/avant utilisation des commandes de trimming) :

[Math.11]

$$K_C = \begin{bmatrix} Kx & Kxy \\ Kxy & Ky \end{bmatrix}$$

Où Kx, Ky sont les raideurs dans les axes x et y en repère capteur et Kxy est la quadrature en repère capteur.

La matrice de raideur $K_O$ dans le repère onde (faisant un angle θ avec le repère capteur) est donnée par :

[Math.12]

$$K_O = \begin{bmatrix} K + (\Delta K)\cos(2\theta) - (Kxy)\sin(2\theta) & (\Delta K)\sin(2\theta) + (Kxy)\cos(2\theta) \\ (\Delta K)\sin(2\theta) + (Kxy)\cos(2\theta) & K - (\Delta K)\cos(2\theta) + (Kxy)\sin(2\theta) \end{bmatrix}$$

[Math.13]

$$K = \frac{Kx + Ky}{2}$$

[Math.14]

$$\Delta K = \frac{Kx - Ky}{2}$$

Avec les commandes de trimming TFx, TFy (raideurs) et TQ (quadrature), on modifie directement la matrice de raideur $K_C$ à l'aide d'une matrice Kt de trimming en repère capteur, où :

[Math.15]

$$K_t = \begin{bmatrix} Ktx & Kq \\ Kq & Kty \end{bmatrix}$$

La matrice K devient alors $K_{mod}$ en repère capteur :

[Math.16]

$$K_{mod} = K_C - K_t = \begin{bmatrix} Kx - Ktx & Kxy - Kq \\ Kxy - Kq & Ky - Kty \end{bmatrix}$$

Où Ktx, Kty sont les corrections des transducteurs de trimming de raideur, et Kq la correction des transducteurs de quadrature. Ces corrections sont exprimées en repère capteur. Selon l'invention, on cherche à supprimer l'écart de raideur et à annuler la quadrature, donc il est recherché la matrice Kt à appliquer pour que $K_{mod}$ ressemble à une matrice proportionnelle à l'identité, c'est-à-dire du type :

[Math.17]

$$K_{mod} = \begin{bmatrix} Kx_{mod} & 0 \\ 0 & Kx_{mod} \end{bmatrix}$$

Quand le capteur fonctionne, c'est-à-dire lorsqu'il est asservi, on peut mesurer le terme de quadrature en repère onde qui est représenté par le terme $K_O(2,1)$, c'est-à-dire :

[Math.18]

$$K_O(2,1) = K_O(1,2) = (\Delta K)sin(2\theta) + (Kxy)\,cos(2\theta)$$

On peut également mesurer le terme de raideur qui correspond à la fréquence selon l'axe de l'onde x' et qui est représenté par le terme $K_O(1,1)$, c'est-à-dire :

[Math.19]

$$K_O(1,1) = K + (\Delta K)\,cos(2\theta) - (Kxy)\,sin(2\theta)$$

Il ressort de ces deux dernières équations que si ΔK et Kxy étaient des termes fixes, on pourrait remonter à ΔK (et à Kxy) simplement en utilisant la mesure d'une valeur du terme de quadrature $K_O(2,1)$ (et/ou du terme de raideur $K_O(1,1)$) pour au moins deux angles électriques.

Le problème est qu'un gyromètre vibrant utilise généralement des transducteurs électrostatiques qui engendrent des non-linéarités rendant les termes K, Kxy et ΔK non pas fixes mais dépendant également de l'angle électrique θ, ce qui rend difficile l'identification de l'écart ΔK, ainsi que Kxy.

Ainsi, on peut représenter la matrice de raideur sous la forme suivante en repère capteur :

[Math.20]

$$K_C = \begin{bmatrix} \sum_i Aic.\cos(i\theta) + Ais.\sin(i\theta) & \sum_i Cic.\cos(i\theta) + Cis.\sin(i\theta) \\ \sum_i Dic.\cos(i\theta) + Dis.\sin(i\theta) & \sum_i Bic.\cos(i\theta) + Bis.\sin(i\theta) \end{bmatrix}$$

Où i est un nombre entier variant entre 1 et n, n étant supérieur ou égal à 1, et Aic, Ais, Bic, Bis, Cic, Cis, Dic, Dis sont des valeurs lentement variables en température par rapport aux corrections réalisées donc peuvent être considérées comme des constantes, certaines pouvant être nulles. Les termes Kx, Ky et Kxy sont donc plus complexes et dépendent de l'angle électrique θ.

En d'autres termes, chaque terme de la matrice de raideur est composé d'une somme d'harmoniques en cosinus et sinus qui sont fonction de l'angle électrique θ, autrement dit ces termes sinusoidaux sont modulés par des multiples de l'angle θ.

Pour passer au repère onde, on fait un changement de base. La matrice de raideur en repère onde vaut alors :

[Math.21]

$$K_O = \begin{bmatrix} cos\theta & -sin\theta \\ sin\theta & cos\theta \end{bmatrix} K_C \begin{bmatrix} cos\theta & sin\theta \\ -sin\theta & cos\theta \end{bmatrix}$$

On retrouve la matrice $K_O$ de raideur sous la même forme que précédemment, à ceci près que ΔK et Kxy et K prennent également des formes plus complexes et dépendent de l'angle θ.

Comme indiqué précédemment, lorsque le capteur fonctionne, et avant trimming, on peut mesurer la quadrature en repère onde qui est représentée par le terme $K_O(2,1)$ et on peut mesurer la raideur sur l'axe de l'onde x' qui est représentée par le terme $K_O(1,1)$.

Comme indiqué précédemment, les commandes d'excitation et de trimming sont déterminées dans le repère onde mais sont appliquées dans le repère capteur, mais les mesures susmentionnées sont réalisées dans le repère onde.

Or l'objectif de l'invention est de supprimer l'écart de raideur, c'est-à-dire annuler $K_O(1,1)$ - $K_O(2,2)$ et annuler la quadrature, c'est-à-dire les termes $K_O(1,2)$ et $K_O(2,1)$. Le problème c'est qu'on ne peut mesurer que $K_O(1,1)$ et $K_O(2,1)$ et non $K_O(2,2)$. Il y a donc deux équations pour trois inconnues et il n'est pas possible d'utiliser une pluralité d'angles électriques puisque les termes des équations changent en fonction dudit angle. Ensuite, il faut projeter les termes à nouveau en repère capteur pour déterminer les corrections de trimming Ktx, Kty et Kq à appliquer pour annuler ΔK et Kxy.

L'inventeur a constaté que, lorsqu'on projette la matrice de raideur $K_C$ du repère capteur vers le repère onde pour obtenir $K_O$, l'écart de raideur (Kx-Ky) se retrouve dans le terme correspondant à la mesure de la quadrature en repère onde et qu'il peut être isolé. De même, la quadrature Kxy se retrouve dans le terme correspondant à la mesure de la raideur selon l'axe x' de vibration et peut être isolé et il permet de déduire la quadrature Kxy. Ceci est illustré ci-après par quelques exemples simples.

Premier exemple : on considère une première matrice de raideur $K_{C1}$ en repère capteur de la forme suivante :

[Math.22]

$$K_{C1} = \begin{bmatrix} a & 0 \\ 0 & b \end{bmatrix}$$

Où a correspond à Kx, et b correspond à Ky.

On obtient en repère onde :

[Math.23]

$$K_{O1} = \begin{bmatrix} \dfrac{a+b}{2} + \dfrac{a-b}{2}cos(2\theta) & \dfrac{a-b}{2}sin(2\theta) \\ \dfrac{a-b}{2}sin(2\theta) & \dfrac{a+b}{2} - \dfrac{a-b}{2}cos(2\theta) \end{bmatrix}$$

On constate que l'écart de raideur a-b se retrouve sur le terme $K_{O1}(2,1)$ qui représente le terme de quadrature en repère onde et qui s'exprime en :

[Math.24]

$$\frac{a-b}{2}sin(2\theta)$$

L'inconnue recherchée est (a-b) puisque θ est connu.

Deuxième exemple : on considère maintenant une deuxième matrice de raideur $K_{C2}$ en repère capteur de la forme suivante :

[Math.25]

$$K_{C2} = \begin{bmatrix} acos(2\theta) & 0 \\ 0 & bcos(2\theta) \end{bmatrix}$$

Où acos(2θ) correspond à Kx, et bcos(2θ) correspond à Ky.

On obtient en repère onde :

[Math.26]

$$K_{O2}$$
$$= \begin{bmatrix} \dfrac{a+b}{2}cos(2\theta) + \dfrac{a-b}{4} + \dfrac{a-b}{4}cos(4\theta) & \dfrac{a-b}{4}sin(4\theta) \\ \dfrac{a-b}{4}sin(4\theta) & \dfrac{a+b}{2}cos(2\theta) - \dfrac{a-b}{4} - \dfrac{a-b}{4}cos(4\theta) \end{bmatrix}$$

On voit que l'écart de raideur (a-b)cos(2θ) (l'inconnue recherchée étant (a-b) puisque θ est connu) se retrouve sur le terme $K_{O2}(2,1)$ qui s'exprime en :

[Math.27]

$$\frac{a-b}{4}\sin(4\theta)$$

Troisième exemple : un résultat similaire peut être constaté pour une troisième matrice de raideur $K_{C3}$ en repère capteur de la forme suivante :

[Math.28]

$$K_{C3} = \begin{bmatrix} asin(2\theta) & 0 \\ 0 & bsin(2\theta) \end{bmatrix}$$

Où $asin(2\theta)$ correspond à Kx, et $bsin(2\theta)$ correspond à Ky.

Dans ce cas, l'écart de raideur $(a-b)sin(2\theta)$ se retrouve sur le terme $K_{O3}(2,1)$ qui s'exprime en :

[Math.29]

$$\frac{a-b}{4} - \frac{a-b}{4}\cos(4\theta)$$

On peut retrouver $(a-b)$ puisque $\theta$ est connu puis déterminer $(a-b)sin(2\theta)$.

Quatrième exemple : on considère maintenant une quatrième matrice de raideur $K_{C4}$ en repère capteur de la forme suivante :

[Math.30]

$$K_{C4} = \begin{bmatrix} 0 & c \\ c & 0 \end{bmatrix}$$

Où c correspond à Kxy

On obtient en repère onde :

[Math.31]

$$K_{O4} = \begin{bmatrix} -c.sin(2\theta) & c.cos(2\theta) \\ c.cos(2\theta) & c.sin(2\theta) \end{bmatrix}$$

On voit que la quadrature c se retrouve sur le terme $K_{O4}(1,1)$ en $(-c.sin(2\theta))$ qui représente le terme de raideur en repère onde ; et on peut retrouver c puisque $\theta$ est connu.

Cinquième exemple : on considère maintenant une cinquième matrice de raideur $K_{C5}$ en repère capteur de la forme suivante :

[Math.32]

$$K_{C5} = \begin{bmatrix} 0 & c.\cos(2\theta) \\ c.\cos(2\theta) & 0 \end{bmatrix}$$

Où $c.\cos(2\theta)$ correspond à Kxy

On obtient en repère onde :

[Math.33]

$$K_{O5} = \begin{bmatrix} -\dfrac{c}{4}\sin(4\theta) & \dfrac{c}{4}+\dfrac{c}{4}\cos(4\theta) \\ \dfrac{c}{4}+\dfrac{c}{4}\cos(4\theta) & \dfrac{c}{4}\sin(4\theta) \end{bmatrix}$$

On voit que l'erreur de quadrature c.cos(2θ) se retrouve sur le terme $K_{O5}(1,1)$ en

[Math.34]

$$-\frac{c}{4}\sin(4\theta)$$

On peut retrouver c puisque θ est connu puis déterminer c.cos(2θ).

Sixième exemple : on considère maintenant une sixième matrice de raideur $K_{C6}$ en repère capteur de la forme suivante :

[Math.35]

$$K_{C6} = \begin{bmatrix} 0 & c.\sin(2\theta) \\ c.\sin(2\theta) & 0 \end{bmatrix}$$

Où c.sin(2θ) correspond à Kxy

On obtient en repère onde :

[Math.36]

$$K_{O6} = \begin{bmatrix} -\dfrac{c}{4}+\dfrac{c}{4}\cos(4\theta) & \dfrac{c}{4}\sin(4\theta) \\ \dfrac{c}{4}\sin(4\theta) & \dfrac{c}{4}-\dfrac{c}{4}\cos(4\theta) \end{bmatrix}$$

On voit que l'erreur de quadrature c.sin(2θ) se retrouve sur le terme $K_{O6}(1,1)$ en

[0159] [Math.37]

$$-\frac{c}{4}+\frac{c}{4}\cos(4\theta)$$

On peut retrouver c puisque θ est connu, puis déterminer c.sin(2θ).

Dans tous les exemples, on voit qu'on peut aussi exploiter le terme $K_O(1,1)$ pour déterminer l'écart de raideur et/ou d'exploiter le terme $K_O(2,1)$ pour déterminer la quadrature. Plus généralement, on peut exploiter un des termes de la matrice de raideur dans le repère onde pour déterminer l'écart de raideur et/ou la quadrature.

Généralement, et comme indiqué plus avant, la matrice de raideur est de forme plus complexe en repère capteur, c'est-à-dire sous la forme d'une somme d'harmoniques en cos(iθ) et sin(iθ), i étant un nombre entier variant entre 0 et n, n étant supérieur ou égal à 1, comme exprimé dans la formule Math.20. Typiquement, n peut être compris entre 2 et 4. On peut alors décomposer la matrice de raideur en une somme de différentes matrices plus simples comme celles des quatre exemples précédents ($K_{C1}$, $K_{C2}$, $K_{C3}$, $K_{C4}$, $K_{C5}$, $K_{C6}$...) généralement pondérés par des valeurs considérées comme des constantes. On peut ainsi retrouver l'erreur de raideur et/ou la quadrature sous la forme d'une somme de termes, comme expliqué plus après.

Dans chacun des cas présentés, l'inventeur a déterminé qu'en réalisant une analyse des harmoniques en cosinus et sinus de l'angle électrique θ sur les termes représentant la raideur et/ou la quadrature de la matrice de raideur dans le repère onde, il est possible d'en déduire l'écart de raideur et la quadrature liées aux non-linéarités en repère capteur, en isolant les amplitudes de ces termes.

Selon l'invention, plusieurs angles électriques sont déterminés (appliqués et/ou mesurés selon que le capteur fonctionne en mode gyromètre ou gyroscope), formant ainsi une modulation en angles. Cela peut être des valeurs d'angle continues $\theta(t)$ (l'onde tourne en continu) ou discontinues (plusieurs angles $\theta_k$).

Lorsque les angles électriques de l'onde ont des valeurs discontinues, on réalise un filtre, par exemple moindres carrés, sur les termes représentatifs de la quadrature et/ou de la raideur de la matrice de raideur dans le repère onde de manière à isoler et récupérer les constantes (amplitudes) de ces termes.

Lorsque l'onde tourne en continu, on peut réaliser ensuite une démodulation en angles, plus précisément on démodule les termes représentatifs de la quadrature et/ou de la raideur de la matrice de raideur dans le repère onde, la démodulation comprenant un filtrage, par exemple un filtre passe-bas, permettant d'isoler et de récupérer les constantes (amplitudes) des termes de la quadrature et/ou de la raideur. Lesdites amplitudes permettent de déduire l'écart de raideur et la quadrature.

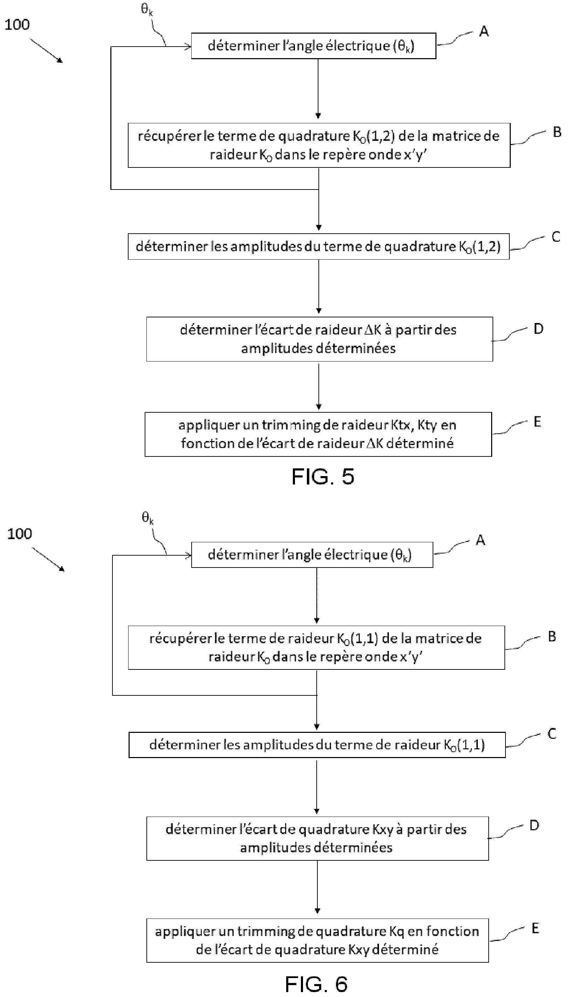

La figure 5 illustre un premier mode de réalisation du procédé de calibration de l'invention dans lequel on réalise les opérations suivantes :

**A** : déterminer (appliquer ou mesurer) l'angle électrique ($\theta_k$) ;

**B** : récupérer le terme de quadrature $K_O(2,1)$ de la matrice de raideur $K_O$ dans le repère onde x'y', ledit terme étant sous la forme d'une somme de fonctions en $\cos(i\theta)$ et en $\sin(i\theta)$, i est un nombre entier variant entre 1 et n, n étant supérieur ou égal à 1;

les étapes **A** et **B** étant réitérées pour une pluralité k d'angles électriques $\theta_k$, où k est un entier variant entre 1 et m, m étant supérieur ou égal à 2 ;

**C** : déterminer les amplitudes des fonctions en $\cos(i\theta)$ et en $\sin(i\theta)$ ;

**D** : déterminer l'écart de raideur $\Delta K$ à partir des amplitudes déterminées ; et

**E :** appliquer un trimming de raideur Ktx, Kty en fonction de l'écart de raideur déterminé $\Delta K$.

L'étape C de détermination des amplitudes peut être réalisée en utilisant un filtre moindres carrés au terme de quadrature $K_O(2,1)$. Dans ce cas il faut au moins autant d'angles $\theta_k$ que d'amplitudes à déterminer.

La figure 6 illustre un deuxième mode de réalisation du procédé de calibration de l'invention dans lequel on réalise les opérations suivantes :

**A** : déterminer (appliquer ou mesurer) l'angle électrique ($\theta_k$) ;

**B** : récupérer le terme de raideur $K_O(1,1)$ de la matrice de raideur $K_O$ dans le repère onde x'y', ledit terme étant sous la forme d'une somme de fonctions en $\cos(i\theta)$ et en $\sin(i\theta)$, i est un nombre entier variant entre 1 et n, n étant supérieur ou égal à 1 ;

les étapes **A** et **B** étant réitérées pour une pluralité k d'angles électriques $\theta_k$, où k est un entier variant entre 1 et m, m étant supérieur ou égal à 2 ;

**C** : déterminer les amplitudes des fonctions en $\cos(i\theta)$ et en $\sin(i\theta)$ ;

**D** : déterminer la quadrature Kxy à partir des amplitudes déterminées ; et

**E** : appliquer un trimming de quadrature Kq en fonction de la quadrature déterminée Kxy.

L'étape **C** de détermination des amplitudes peut être réalisée en utilisant un filtre moindres carrés au terme de raideur $K_O(1,1)$. Dans ce cas, il faut au moins autant d'angles $\theta_k$ que d'amplitudes à déterminer.

Evidemment, les procédés de calibration selon les deux modes de réalisation des figures 5 et 6 peuvent être combinés entre eux afin de corriger l'écart de raideur et la quadrature

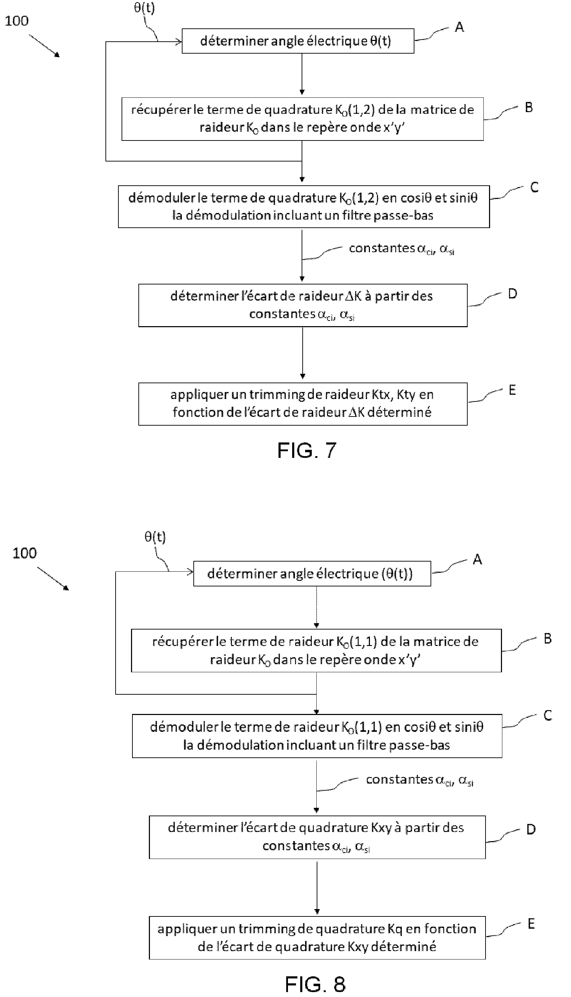

La figure 7 illustre un troisième mode de réalisation du procédé de calibration de l'invention, dans lequel l'onde de vibration tourne en continu et on réalise les opérations suivantes :

**A** : déterminer (appliquer ou mesurer) l'angle électrique $\theta(t)$ ;

**B** : récupérer le terme de quadrature $K_O(2,1)$, de la matrice de raideur $K_O$ dans le repère onde x'y', ledit terme étant sous la forme d'une somme de fonctions en $\cos(i\theta)$ et en $\sin(i\theta)$, i est un nombre entier variant entre 1 et n, n étant supérieur ou égal à 1;

les étapes **A** et **B** étant réitérées pendant une durée T, ainsi on peut :

**C** : démoduler le terme de quadrature en $\cos(i\theta)$ et en $\sin(i\theta)$ pour chaque i variant entre 1 et n, la démodulation incluant l'application d'un filtre passe-bas, de manière à déterminer les amplitudes des fonctions en $\cos(i\theta)$ et en $\sin(i\theta)$ ;

**D** : déterminer l'écart de raideur $\Delta K$ à partir des amplitudes déterminées; et

**E** : appliquer un trimming de raideur Ktx, Kty en fonction de l'écart de raideur déterminé $\Delta K$.

La durée T peut correspondre à un tour si les termes sont en $\cos(i\theta)$ et $\sin(i\theta)$ comme indiqué ci-dessus ou à un demi-tour si alternativement, les termes sont en cos(2iθ) et sin(2iθ). L'onde peut tourner par exemple à une vitesse de 1° par seconde, bien que cela ne soit pas limitatif.

Le terme de quadrature $K_0(2,1)$ peut être récupéré comme suit. La commande Cq correspond à la force de quadrature Fq pour contrôler la quadrature de l'onde à un gain près connu (nommé facteur d'échelle) qui vient corriger $Ko(2,1).x_0$ où $x_0$ est l'amplitude de l'onde. Ainsi, on peut obtenir $K_O(2,1)$ par la formule :

[Math.38]

$$K_O(2,1) = \dfrac{Fq}{x_0}$$

La figure 8 illustre un quatrième mode de réalisation du procédé de calibration de l'invention, dans lequel, l'onde de vibration tourne en continu et on réalise les opérations suivantes :

**A** : déterminer (appliquer ou mesurer), l'angle électrique (θ(t)) ;
**B** : récupérer le terme de raideur $K_O(1,1)$, de la matrice de raideur $K_O$ dans le repère onde x'y', ledit terme étant sous la forme d'une somme de fonctions en cos(iθ) et en sin(iθ), i est un nombre entier variant entre 1 et n, n étant supérieur ou égal à 1;
les étapes **A** et **B** étant réitérées pendant une durée T ; ainsi on peut :

**C** : démoduler le terme de quadrature en cos(iθ) et en sin(iθ) pour chaque i variant entre 1 et n, la démodulation incluant l'application d'un filtre passe-bas, de manière à déterminer les amplitudes des fonctions en cos(iθ) et en sin(iθ) ;
**D** : déterminer la quadrature Kxy à partir des amplitudes déterminées ; et
**E** : appliquer un trimming de quadrature Kq en fonction de la quadrature déterminée Kxy.

La durée T peut correspondre à un tour si les termes sont en cos(iθ) et sin(iθ) comme indiqué ci-dessus ou à un demi-tour si alternativement, les termes sont en cos(2iθ) et sin(2iθ). L'onde peut tourner par exemple à une vitesse de 1° par seconde, bien que cela ne soit pas limitatif.

Le terme de raideur $K_0(1,1)$ peut être récupéré grâce à l'évaluation de la pulsation de vibration ω de l'onde :

[Math.39]

$$KK_O(1,1) = M \times \omega^2$$

où M est la masse et est connue.

Evidemment, les procédés de calibration selon les deux modes de réalisation des figures 7 et 8 peuvent être combinés entre eux afin de corriger l'erreur de raideur et la quadrature.

Dans l'un ou l'autre des quatre modes, et de manière générale pour le procédé de calibration selon l'invention, on peut aussi exploiter le terme de raideur $K_O(1,1)$ de la matrice de raideur dans le repère onde pour déterminer l'écart de raideur et/ou d'exploiter le terme de quadrature $K_O(2,1)$ de la matrice de raideur dans le repère onde pour déterminer la quadrature. Plus généralement, on peut exploiter un des termes de la matrice de raideur dans le repère onde pour déterminer l'écart de raideur et/ou la quadrature.

Dans l'un ou l'autre des quatre modes, et de manière générale pour le procédé de calibration selon l'invention, ledit procédé peut être mis en œuvre alors que le capteur inertiel fonctionne en mode gyromètre. L'angle électrique $θ_k$ ou θ(t) déterminé à l'étape **A** est dans ce cas égal à un angle $θ_{k\_imp}$ ou $θ(t)_{imp}$ imposé à la vibration via la commande de précession Cp. On peut utiliser différentes valeurs de $θ_{k\_imp}$ ou $θ(t)_{imp}$ pour moyenner les erreurs, soit par rotation en continu $θ(t)_{imp}$, par exemple sur un tour ou un demi-tour (ou plusieurs tours ou demi-tours), soit par rotation en discontinu, par exemple en effectuant des mesures pour $θ_{k\_imp}$ égal à 30° puis 60° puis 90°. Les étapes **A** à **B** sont mises en œuvre successivement pour chaque angle électrique $θ_{k\_imp}$ ou $θ(t)_{imp}$.

Alternativement, le procédé de calibration peut être mis en œuvre alors que le capteur inertiel fonctionne en mode gyroscope. L'angle électrique $θ_k$ ou θ(t) résulte alors d'une rotation du capteur inertiel et est mesuré par celui-ci. L'angle électrique déterminé à l'étape **A** est égal à l'angle de rotation mesuré $θ_{k\_m}$ ou $θ(t)_m$. Les étapes **A** à **B** sont mises en œuvre successivement pour chaque angle électrique $θ_{k\_m}$ ou $θ(t)_m$. L'angle $θ_{k\_m}$ peut résulter des modifications liées aux mouvements du porteur mais également de modifications liées à une commande de précession.

Encore alternativement, le procédé de calibration selon l'invention peut être mis en œuvre selon un mode mixte gyromètre/gyroscope.

Ainsi, les commandes les trimming sont réalisées en modifiant les valeurs de Ktx, Kty et Kq en fonction de l'écart de raideur et de la quadrature déterminée, et ce en fonction de l'angle électrique. Cela permet de corriger les non-linéarités.

On peut ainsi déterminer en permanence l'écart de raideur et la quadrature, et les corriger par trimming. Une boucle fermée peut mettre à jour la matrice de trimming, c'est à dire les valeurs Ktx, Kty et Kq pour corriger en permanence les erreurs de non-linéarités. Les corrections peuvent aussi être appliquées de manière fixe ou encore être appliquées seulement si elles sont plus élevées qu'un seuil prédéterminé, ce qui permet de réduire le bruit lié à l'application d'une commande en boucle fermée.

Les étapes **A** à **E** citées précédemment peuvent être mises en place dans un asservissement jusqu'à annulation complète de ΔK et Kxy.

Nous allons maintenant illustrer le procédé de calibration des étapes **A** à **D** pour chacun des quatre premiers exemples donnés précédemment. Les trois premiers exemples illustrés sont donnés pour déterminer l'écart de raideur, et le quatrième exemple illustré est donné pour déterminer la quadrature.

Premier exemple

Pour la matrice de raideur $K_{O1}$ dans le repère onde x'y' et pour plusieurs angles électriques θ :

**A** on détermine l'angle électrique θ ;
**B** on récupère le terme $K_{O1}(2,1)$ (qui est égal au terme $K_{O1}(1,2)$) de la matrice de raideur dans le repère onde x'y', soit Math.24

$$\frac{a-b}{2}sin(2\theta) \; ;$$

sachant que dans la matrice de raideur $K_{C1}$ en repère capteur, a correspond à Kx, et b correspond à Ky ; puis
**C** on démodule le terme $K_{O1}(1,2)$ en sin(2θ) et on obtient :

[Math.40]
$$\frac{a-b}{4} - \frac{a-b}{2}sin(4\theta) \; ;$$

puis, avec un filtre passe-bas, on obtient la constante (amplitude) : (a-b)/4 ;
**D** on en déduit donc Kx - Ky qui est égal à 4 fois (a-b)/4.

Deuxième exemple

Pour la matrice de raideur $K_{O2}$ dans le repère onde x'y' et pour plusieurs angles électriques θ :

**A** on détermine l'angle électrique θ ;
**B** on récupère le terme $K_{O2}(2,1)$ (qui est égal au terme $K_{O2}(1,2)$) de la matrice de raideur dans le repère onde x'y', soit Math.27

$$\frac{a-b}{4}sin(4\theta) \; ;$$

sachant que dans la matrice de raideur $K_{C2}$ en repère capteur, acos(2θ) correspond à Kx, et bcos(2θ) correspond à Ky ; puis
C on démodule le terme $K_{O1}(1,2)$ en sin(2θ) et on obtient :

[Math.41]
$$\frac{a-b}{8} - \frac{a-b}{8}sin(8\theta) \; ;$$

puis, avec un filtre passe-bas, on obtient la constante (amplitude) : (a-b)/8 ;
**D** on en déduit donc Kx - Ky qui est égal à 8 fois (a-b)/8 multiplié par cos(2θ).

Troisième exemple

Pour la matrice de raideur $K_{O3}$, le résultat diffère en ce qu'il faudrait multiplier par sin(2θ) et non par cos(2θ).

Quatrième exemple

Pour la matrice de raideur $K_{O4}$ dans le repère onde x'y' et pour plusieurs angles électriques θ :

**A** on détermine l'angle électrique θ ;
**B** on récupère le terme $K_{O4}(1,1)$ de la matrice de raideur dans le repère onde x'y', soit : -c.sin(2θ) ;
sachant que dans la matrice de raideur $K_{C4}$ en repère capteur, c correspond à Kxy ; puis
**C on** démodule le terme $K_{O4}(1,1)$ en sin(2θ) et on obtient :

[Math.42]
$$-\frac{c}{2} + \frac{c}{2}sin(4\theta) \; ;$$

puis, avec un filtre passe-bas, on obtient la constante (amplitude): -c/2 ;
**D** on en déduit donc Kxy qui est égal à -c/2 fois (-2).

On applique la même logique aux cinquième et sixième exemples.
Pour le cinquième exemple, on récupère le terme $K_{O5}(1,1)$ de la matrice de raideur dans le repère onde x'y', soit Math.34

$$-\frac{c}{4}\sin(4\theta) \; ;$$

qu'on va démoduler en sin4θ et filtrer pour extraire la constante (amplitude) c qu'on peut ensuite multiplier par cos2θ.
Pour le sixième exemple, on récupère le terme $K_{O6}(1,1)$ de la matrice de raideur dans le repère onde x'y', soit Math.37

$$-\frac{c}{4} + \frac{c}{4}\cos(4\theta)$$

qu'on va démoduler en cos4θ et filtrer pour extraire la constante (amplitude) c qu'on peut ensuite multiplier par sin2θ.
Comme indiqué plus avant, lorsque la matrice de raideur est de forme plus complexe, c'est-à-dire sous la forme d'une somme d'harmoniques en cosinus(iθ) et sinus(iθ), i étant un nombre entier variant entre 1 et n, n étant supérieur ou égal à 1, on peut décomposer la matrice de raideur $K_C$ en une somme de différentes matrices plus simples comme celles ($K_{C1}$, $K_{C2}$, $K_{C3}$, $K_{C4}$, $K_{C5}$, $K_{C6}$...) décrites ci-dessus, somme généralement pondérée par des valeurs considérées comme des constantes. Ainsi, l'erreur de raideur et/ou l'erreur de quadrature correspond à la somme des termes déterminés aux différentes étapes **D** pour chacune des matrices simples.
Une alternative est d'exploiter le terme $K_O(1,1)$ pour déterminer l'écart de raideur, et/ou d'exploiter le terme $K_O(2,1)$ pour déterminer la quadrature, comme cela ressort des différents exemples. Par exemple :
Dans le second exemple :

[Math.25]
$$K_{C2} = \begin{bmatrix} acos(2\theta) & 0 \\ 0 & bcos(2\theta) \end{bmatrix}$$

se transforme en :

[Math.26]

$$K_{O2}$$
$$= \begin{bmatrix} \dfrac{a+b}{2}cos(2\theta) + \dfrac{a-b}{4} + \dfrac{a-b}{4}cos(4\theta) & \dfrac{a-b}{4}sin(4\theta) \\ \dfrac{a-b}{4}sin(4\theta) & \dfrac{a+b}{2}cos(2\theta) - \dfrac{a-b}{4} - \dfrac{a-b}{4}cos(4\theta) \end{bmatrix}$$

On voit que l'on peut aussi exploiter le terme $K_{O2}(1,1)$ pour remonter à (a-b).

Dans le quatrième exemple :

[Math.30]

$$K_{C4} = \begin{bmatrix} 0 & c \\ c & 0 \end{bmatrix}$$

se transforme en :

[Math.31]

$$K_{O4} = \begin{bmatrix} -c.sin(2\theta) & c.cos(2\theta) \\ c.cos(2\theta) & c.sin(2\theta) \end{bmatrix}$$

On peut également exploiter le terme $K_{O4}(2,1)$ pour remonter à c.

Ainsi, l'invention utilise les transducteurs de trimming pour corriger l'écart de raideur et la quadrature et surtout l'invention exploite le fait que les harmoniques se transforment en passant du repère capteur au repère onde, et qu'ainsi l'écart de raideur et la quadrature se retrouvent dans un ou plusieurs des termes de la matrice de raideur dans le repère onde, sous une certaine forme. Comme la quadrature et la raideur sont déterminables sans avoir à apporter de perturbation, on peut observer et corriger en temps réel à la fois la quadrature et l'écart de raideur, sans perturber le capteur avec une perturbation qui pourrait se retrouver sur la mesure délivrée par le capteur.

Les différents modes présentés peuvent être combinés entre eux.

En outre, la présente invention n'est pas limitée aux modes de réalisation précédemment décrits mais s'étend à tout mode de réalisation entrant dans la portée des revendications.

**Revendications**

1. Procédé de calibration (100) de l'écart de raideur $\Delta K$ et/ou de la quadrature Kxy d'un capteur angulaire inertiel vibrant (10), le capteur inertiel comprenant un résonateur (Res) s'étendant autour de deux axes x et y perpendiculaires entre eux définissant un repère capteur xy et comprenant :

   - au moins une masse mobile vibrante (M1), ladite au moins une masse mobile comportant au moins deux parties configurées pour vibrer en opposition de phase l'une par rapport à l'autre à une pulsation de vibration ($\omega$) et selon une direction x' définissant un repère onde x'y', l'onde de vibration (OV) selon x' faisant un angle électrique ($\theta$) par rapport à l'axe x ;
   - une pluralité de transducteurs électrostatiques commandés par des tensions électriques et opérant selon les deux axes x ou y, dont au moins :

     -- une paire de transducteurs de détection (Dx, Dy) configurés pour détecter les mouvements de l'onde de vibration selon l'axe x et l'axe y ;
     -- une paire de transducteurs d'excitation (Ex, Ey) auxquels sont appliquées des forces d'excitation respectivement selon l'axe x et l'axe y, via une pluralité de commandes d'excitation déterminées par des asservissements à partir des mouvements détectés, configurés pour maintenir l'onde à une amplitude constante via une commande d'amplitude (Ca) et, le cas échéant, pour faire tourner ladite onde de vibration via une commande de précession (Cp) et une commande (Cq) pour contrôler la quadrature de l'onde ;
     -- une paire de transducteurs de compensation de quadrature (Q+, Q-) ; commandés via une commande de quadrature (CTq) ; et

-- une paire de transducteurs d'ajustement de raideur (Tx, Ty), commandés via respectivement une commande de raideur (CTx) selon l'axe x et une commande de raideur (CTy) selon l'axe y, formant une commande de raideur (CTf) ;

le résonateur (Res) présentant une matrice de raideur $K_C$ dans le repère capteur et une matrice de raideur $K_O$ dans le repère onde ;

le procédé de calibration s'appliquant lorsque le capteur inertiel est en fonctionnement avec une onde de vibration (OV) vibrant selon la direction x' ;

le procédé de calibration comprenant les étapes consistant à :

- **A** déterminer l'angle électrique ($\theta_k$, $\theta(t)$) ;
- **B** récupérer au moins un terme de la matrice de raideur $K_O$ dans le repère onde x'y', pouvant être un terme de quadrature $K_O(2,1)$ ou un terme de raideur $K_O(1,1)$, ledit terme étant sous la forme d'une somme de fonctions en $\cos(i\theta)$ et en $\sin(i\theta)$, i est un nombre entier variant entre 1 et n, n étant supérieur ou égal à 1; les étapes **A** et **B** étant réitérées soit pour une pluralité d'angles électriques ($\theta_k$), où k est un entier variant entre 1 et m, m étant supérieur ou égal à 2, soit pendant une durée (T) au cours de laquelle l'onde de vibration (OV) tourne en continu selon un angle électrique ($\theta(t)$) variant en fonction du temps (t) ; puis
- **C** déterminer les amplitudes des fonctions en $\cos(i\theta)$ et en $\sin(i\theta)$ ; et
- **D** déterminer l'écart de raideur $\Delta K$, respectivement la quadrature Kxy, à partir des amplitudes déterminées.

2. Procédé de calibration selon la revendication 1, l'angle électrique décrivant une pluralité d'angles électriques ($\theta_k$) où k est un entier variant entre 1 et m, m étant supérieur ou égal à 2, l'étape **C** de détermination des amplitudes comprenant l'application d'un filtre moindres carrés au terme récupéré, la quantité (m) d'angles électriques ($\theta_k$) étant au moins égal au nombre d'amplitudes à déterminer.

3. Procédé de calibration selon la revendication 1, l'onde de vibration (OV) tournant en continu selon un angle électrique ($\theta(t)$) variant en fonction du temps (t) pendant une durée (T), l'étape **C** de détermination des amplitudes comprenant la démodulation du terme récupéré en $\cos(i\theta)$ et en $\sin(i\theta)$ pour chaque i variant entre 1 et n, de manière à déterminer les amplitudes des fonctions en $\cos(i\theta)$ et en $\sin(i\theta)$; et - l'étape **D** de détermination de l'écart de raideur $\Delta K$, respectivement de la quadrature Kxy, est réalisée à partir des amplitudes déterminées.

4. Procédé de calibration selon l'une des revendications 1 à 3 dans lequel le capteur inertiel fonctionne en mode gyromètre, l'angle électrique ($\theta_k$, ($\theta(t)$) déterminé à l'étape **A** étant égal à un angle imposé ($\theta_{k\_imp}$, ($\theta(t)_{imp}$) via la commande de précession(Cp).

5. Procédé de calibration selon l'une des revendications 1 à 3 dans lequel le capteur inertiel fonctionne en mode gyroscope, l'angle électrique ($\theta_k$, ($\theta(t)$) résultant d'une rotation du capteur inertiel étant mesuré par ledit capteur inertiel, potentiellement superposé à une commande de précession (Cp), l'angle électrique déterminé à l'étape **A** étant égal audit angle de rotation mesuré ($\theta_{k\_m}$, ($\theta(t)_m$).

6. Procédé de calibration selon l'une quelconque des revendications 1 à 5, comprenant en outre une étape complémentaire consistant à :

- **E** appliquer une commande de raideur (CTf), respectivement une commande de quadrature (CTq), à partir de l'écart de raideur $\Delta K$, respectivement de la quadrature Kxy, déterminé à l'étape **D.**

7. Procédé de calibration selon la revendication 6, les étapes **A** à **E** pouvant être incluses dans un asservissement en boucle fermée ou pouvant être mises en œuvre en boucle ouverte de manière itérée, de préférence deux fois.

8. Capteur angulaire inertiel (10) comprenant un résonateur (Res) s'étendant autour de deux axes x et y perpendiculaires entre eux définissant un repère capteur xy et comprenant :

- au moins une masse mobile vibrante (M1), ladite au moins une masse mobile comprenant au moins deux parties configurées pour vibrer en opposition de phase l'une par rapport à l'autre à une pulsation de vibration ($\omega$) et selon une direction x' définissant un repère onde x'y', l'onde de vibration (OV) selon x' faisant un angle électrique ($\theta$) par rapport à l'axe x ;
- une pluralité de transducteurs électrostatiques commandés par des tensions électriques et opérant selon les deux axes x ou y, dont au moins :

-- une paire de transducteurs de détection (Dx, Dy) configurés pour détecter les mouvements de l'onde de vibration selon l'axe x et l'axe y ;

-- une paire de transducteurs d'excitation (Ex, Ey) auxquels sont appliquées des forces d'excitation respectivement selon l'axe x et l'axe y, via une pluralité de commandes d'excitation déterminées par des asservissements à partir des mouvements détectés, configurés pour maintenir l'onde à une amplitude constante via une commande d'amplitude (Ca) et, le cas échéant, pour faire tourner ladite onde de vibration via une commande de précession (Cp) et une commande (Cq) pour contrôler la quadrature de l'onde ;

-- une paire de transducteurs de compensation de quadrature (Q+, Q-), commandés via une commande de quadrature (CTq) ; et

-- une paire de transducteurs d'ajustement de raideur (Tx, Ty), commandés via respectivement une commande de raideur (CTx) selon l'axe x et une commande de raideur (CTy) selon l'axe y, formant ainsi une commande de raideur (CTf),

le résonateur (Res) présentant une matrice de raideur $K_C$ dans le repère capteur et une matrice de raideur $K_O$ dans le repère onde ;

le capteur angulaire inertiel comprenant en outre :

- un moyen de détermination de l'angle électrique ($\theta_k$, $\theta(t)$) ;
- un moyen de récupération d'au moins un terme de la matrice de raideur $K_O$ dans le repère onde x'y', pouvant être un terme de quadrature $K_O(2,1)$ ou un terme de raideur $K_O(1,1)$ ; et
- une unité de traitement (UT) configurée pour implémenter au moins les étapes **A** à **D**, et éventuellement l'étape **E,** du procédé de calibration choisi selon l'une quelconque des revendications 1 à 7 ;

les transducteurs d'ajustement de raideur (Tx, Ty), respectivement de compensation du biais en quadrature (Q+, Q-), étant configurés pour appliquer ladite commande de raideur (CTf), respectivement ladite commande de quadrature (CTq), au résonateur.

**9.** Capteur angulaire inertiel (10) selon la revendication 8, ledit capteur inertiel étant axisymétrique.

**10.** Capteur angulaire inertiel (10) selon la revendication 8 ou la revendication 9, comprenant au moins deux masses mobiles vibrantes (M1, M2) formant les au moins deux parties configurées pour vibrer en opposition de phase l'une par rapport à l'autre, une masse mobile pouvant être disposée autour d'une autre masse mobile.

**11.** Procédé de mesure d'une vitesse angulaire ou d'une orientation angulaire d'un porteur sur lequel est disposé un capteur inertiel (10) selon l'une des revendications 8 à 10, le procédé de mesure comprenant :

- la calibration dudit capteur inertiel mettant en œuvre le procédé de calibration (100) choisi selon l'une quelconque des revendications 1 à 7 ; et
- la mesure de la vitesse angulaire ou de l'orientation angulaire,

le capteur inertiel étant utilisé en mode gyromètre ou en mode gyroscope.

**Patentansprüche**

**1.** Verfahren zum Kalibrieren (100) der Steifigkeitsdifferenz ∆K und/oder der Quadratur Kxy eines schwingenden Inertialwinkelsensors (10), wobei der Inertialsensor einen Resonator (Res) umfasst, der sich um zwei zueinander senkrechte Achsen x und y erstreckt, die ein Sensorkoordinatensystem xy definieren, und umfasst:

- mindestens eine bewegliche schwingende Masse (M1), wobei die mindestens eine bewegliche Masse mindestens zwei Teile umfasst, die so konfiguriert sind, dass sie gegenphasig zueinander mit einer Schwingungsfrequenz ($\omega$) und in einer Richtung x' schwingen, die ein Wellenkoordinatensystem x'y' definiert, wobei die Schwingungswelle (OV) entlang x' einen elektrischen Winkel ($\theta$) in Bezug auf die x-Achse bildet;
- eine Vielzahl von elektrostatischen Wandlern, die durch elektrische Spannungen angesteuert werden und entlang der zwei Achsen x oder y arbeiten, darunter mindestens:

-- ein Paar Detektionswandler (Dx, Dy), die so konfiguriert sind, dass sie die Bewegungen der Schwingungswelle entlang der x-Achse und der y-Achse erfassen;

-- ein Paar Erregungswandler (Ex, Ey), auf die Erregungskräfte entlang der x-Achse bzw. der y-Achse ausgeübt werden über eine Vielzahl von Erregungssteuerungen, die von Regelungen auf Grundlage der erfassten Bewegungen bestimmt werden, die so konfiguriert sind, dass sie die Welle über eine Amplitudensteuerung (Ca) auf einer konstanten Amplitude halten und gegebenenfalls die Schwingungswelle über eine Präzessionssteuerung (Cp) und eine Steuerung (Cq) drehen, um die Quadratur der Welle zu steuern;

-- ein Paar Quadraturkompensationswandler (Q+, Q-), die über eine Quadratursteuerung (CTq) angesteuert werden; und

-- ein Paar Steifigkeitsanpassungswandler (Tx, Ty), die über eine Steifigkeitssteuerung (CTx) entlang der x-Achse bzw. eine Steifigkeitssteuerung (CTy) entlang der y-Achse angesteuert werden, wodurch eine Steifigkeitssteuerung (CTf) gebildet wird;

wobei der Resonator (Res) eine Steifigkeitsmatrix $K_C$ im Sensorkoordinatensystem und eine Steifigkeitsmatrix $K_O$ im Wellenkoordinatensystem aufweist;

wobei das Kalibrierungsverfahren angewendet wird, wenn sich der Inertialsensor mit einer in der Richtung x' schwingenden Schwingungswelle (OV) in Betrieb befindet;

wobei das Kalibrierungsverfahren die Schritte umfasst, die darin bestehen:

- **A** den elektrischen Winkel ($\theta_k$, $\theta$ (t)) zu bestimmen;
- **B** mindestens einen Term der Steifigkeitsmatrix $K_o$ im Wellenkoordinatensystem x'y' zu gewinnen, der ein Quadraturterm $K_O(2,1)$ oder ein Steifigkeitsterm $K_O(1, 1)$ sein kann, wobei der Term in Form einer Summe von Funktionen in $\cos(i\theta)$ und in $\sin(i\theta)$ vorliegt, i eine ganze Zahl ist, die zwischen 1 und n variiert, wobei n größer oder gleich 1 ist;

wobei die Schritte **A** und **B** entweder für eine Vielzahl von elektrischen Winkeln ($\theta_k$), wobei k eine ganze Zahl ist, die zwischen 1 und m variiert, wobei m größer oder gleich 2 ist, oder während einer Dauer (T), in deren Verlauf sich die Schwingungswelle (OV) kontinuierlich um einen elektrischen Winkel ($\theta$ (t)) dreht, der in Abhängigkeit von der Zeit (t) variiert, wiederholt werden; und anschließend

- **C** die Amplituden der Funktionen in $\cos(i\theta)$ und in $\sin(i\theta)$ zu bestimmen; und
- **D** die Steifigkeitsdifferenz $\Delta K$ bzw. die Quadratur Kxy auf Grundlage der bestimmten Amplituden zu bestimmen.

2. Kalibrierungsverfahren nach Anspruch 1, wobei der elektrische Winkel eine Vielzahl von elektrischen Winkeln ($\theta_k$) beschreibt, wobei k eine ganze Zahl ist, die zwischen 1 und m variiert, wobei m größer oder gleich 2 ist, wobei der Schritt **C** des Bestimmens der Amplituden das Anwenden eines Filters der kleinsten Quadrate auf den gewonnenen Term umfasst, wobei die Anzahl (m) der elektrischen Winkel ($\theta_k$) mindestens gleich der Anzahl der zu bestimmenden Amplituden ist.

3. Kalibrierungsverfahren nach Anspruch 1, wobei sich die Schwingungswelle (OV) während einer Dauer (T) kontinuierlich um einen elektrischen Winkel ($\theta(t)$) dreht, der in Abhängigkeit von der Zeit (t) variiert, wobei der Schritt **C** des Bestimmens der Amplituden das Demodulieren des gewonnenen Terms in $\cos(i\theta)$ und in sin(i9) für jedes i, das zwischen 1 und n variiert, umfasst, um die Amplituden der Funktionen in $\cos(i\theta)$ und in $\sin(i\theta)$ zu bestimmen; und

- der Schritt **D** des Bestimmens der Steifigkeitsdifferenz $\Delta K$ bzw. der Quadratur Kxy auf Grundlage der bestimmten Amplituden vorgenommen wird.

4. Kalibrierungsverfahren nach einem der Ansprüche 1 bis 3, wobei der Inertialsensor im Gyrometermodus arbeitet, wobei der in Schritt **A** bestimmte elektrische Winkel ($\theta_k$, ($\theta(t)$) gleich einem über die Präzessionssteuerung (Cp) vorgegebenen Winkel ($\theta_{k\_imp}$, ($\theta(t)_{imp}$) ist.

5. Kalibrierungsverfahren nach einem der Ansprüche 1 bis 3, wobei der Inertialsensor im Gyroskopmodus arbeitet, wobei der elektrische Winkel ($\theta\kappa$, ($\theta(t)$), der sich aus einer Drehung des Inertialsensors ergibt, vom Inertialsensor gemessen wird, möglicherweise mit einer Präzessionssteuerung (Cp) überlagert, wobei der in Schritt **A** bestimmte elektrische Winkel gleich dem gemessenen Drehwinkel ($\theta_{k\_m}$, ($\theta(t)_m$) ist.

6. Kalibrierungsverfahren nach einem der Ansprüche 1 bis 5, das weiter einen zusätzlichen Schritt umfasst, der darin besteht:

- **E** eine Steifigkeitssteuerung (CTf) bzw. eine Quadratursteuerung (CTq) auf Grundlage der Steifigkeitsdifferenz ∆K bzw. der Quadratur Kxy, die in Schritt **D** bestimmt wurde, anzuwenden.

7. Kalibrierungsverfahren nach Anspruch 6, wobei die Schritte **A** bis **E** in einer Regelung mit geschlossenem Regelkreis beinhaltet sein oder in einem offenen Regelkreis iterativ, vorzugsweise zweimal, umgesetzt werden können.

8. Inertialwinkelsensor (10), der einen Resonator (Res) umfasst, der sich um zwei zueinander senkrechte Achsen x und y erstreckt, die ein Sensorkoordinatensystem xy definieren, und umfasst:

- mindestens eine bewegliche schwingende Masse (M1), wobei die mindestens eine bewegliche Masse mindestens zwei Teile umfasst, die so konfiguriert sind, dass sie gegenphasig zueinander mit einer Schwingungsfrequenz ($\omega$) und in einer Richtung x' schwingen, die ein Wellenkoordinatensystem x'y' definiert, wobei die Schwingungswelle (OV) entlang x' einen elektrischen Winkel ($\theta$) in Bezug auf die x-Achse bildet;
- eine Vielzahl von elektrostatischen Wandlern, die durch elektrische Spannungen angesteuert werden und entlang der zwei Achsen x oder y arbeiten, darunter mindestens:

-- ein Paar Detektionswandler (Dx, Dy), die so konfiguriert sind, dass sie die Bewegungen der Schwingungswelle entlang der x-Achse und der y-Achse erfassen;
-- ein Paar Erregungswandler (Ex, Ey), auf die Erregungskräfte entlang der x-Achse bzw. der y-Achse ausgeübt werden über eine Vielzahl von Erregungssteuerungen, die von Regelungen auf Grundlage der erfassten Bewegungen bestimmt werden, die so konfiguriert sind, dass sie die Welle über eine Amplitudensteuerung (Ca) auf einer konstanten Amplitude halten und gegebenenfalls die Schwingungswelle über eine Präzessionssteuerung (Cp) und eine Steuerung (Cq) drehen, um die Quadratur der Welle zu steuern;
-- ein Paar Quadraturkompensationswandler (Q+, Q-), die über eine Quadratursteuerung (CTq) angesteuert werden; und
-- ein Paar Steifigkeitsanpassungswandler (Tx, Ty), die über eine Steifigkeitssteuerung (CTx) entlang der x-Achse bzw. eine Steifigkeitssteuerung (CTy) entlang der y-Achse angesteuert werden, wodurch eine Steifigkeitssteuerung (CTf) gebildet wird, wobei der Resonator (Res) eine Steifigkeitsmatrix $K_C$ im Sensorkoordinatensystem und eine Steifigkeitsmatrix $K_O$ im Wellenkoordinatensystem aufweist;

wobei der Inertialwinkelsensor weiter umfasst:

- ein Mittel zum Bestimmen des elektrischen Winkels ($\theta_k$, $\theta(t)$);
- ein Mittel zum Gewinnen mindestens eines Terms der Steifigkeitsmatrix $K_O$ im Wellenkoordinatensystem x'y', der ein Quadraturterm $K_O(2,1)$ oder ein Steifigkeitsterm $K_O(1,1)$ sein kann; und
- eine Verarbeitungseinheit (UT), die so konfiguriert ist, dass sie mindestens die Schritte **A bis** D und gegebenenfalls den Schritt **E** des gewählten Kalibrierungsverfahrens nach einem der Ansprüche 1 bis 7 implementiert;

wobei die Wandler zur Steifigkeitsanpassung (Tx, Ty) bzw. Quadraturvorspannungskompensation (Q+, Q-) so konfiguriert sind, dass sie die Steifigkeitssteuerung (CTf) bzw. die Quadratursteuerung (CTq) auf den Resonator anwenden.

9. Inertialwinkelsensor (10) nach Anspruch 8, wobei der Inertialsensor achsensymmetrisch ist.

10. Inertialwinkelsensor (10) nach Anspruch 8 oder Anspruch 9, der mindestens zwei bewegliche schwingende Massen (M1, M2) umfasst, die die mindestens zwei Teile bilden, welche so konfiguriert sind, dass sie gegenphasig zueinander schwingen, wobei eine bewegliche Masse um eine andere bewegliche Masse herum angeordnet sein kann.

11. Verfahren zum Messen einer Winkelgeschwindigkeit oder einer Winkelausrichtung eines Trägers, an dem ein Inertialsensor (10) nach einem der Ansprüche 8 bis 10 angeordnet ist, wobei das Messverfahren umfasst:

- das Kalibrieren des Inertialsensors unter Umsetzung des gewählten Kalibrierungsverfahrens (100) nach einem der Ansprüche 1 bis 7; und
- das Messen der Winkelgeschwindigkeit oder der Winkelausrichtung, wobei der Inertialsensor im Gyrometermodus oder im Gyroskopmodus verwendet wird.

**Claims**

1.  Method for calibrating (100) the difference in stiffness ΔK and/or quadrature Kxy of a vibrating inertial angular sensor (10), the inertial sensor comprising a resonator (Res) extending around two mutually perpendicular axes x and y defining a sensor frame of reference xy and comprising:

    - at least one vibrating mobile mass (M1), said at least one mobile mass comprising at least two portions configured to vibrate in phase opposition to one another at a vibration pulsation ($\omega$) and in a direction x' defining a wave frame of reference x'y', the vibration wave (OV) in the direction x' making an electrical angle ($\theta$) with respect to the axis x;
    - a plurality of electrostatic transducers controlled by electrical voltages and operating along the two axes x or y, of which at least:

        - a pair of transducers for detecting (Dx, Dy) configured to detect the movements of the vibration wave along the axis x and the axis y;

            -- a pair of transducers for exciting (Ex, Ey) to which excitation forces are applied respectively along the axis x and the axis y, via a plurality of excitation controls determined by servo-systems from detected movements, configured to keep the wave at a constant amplitude via an amplitude control (Ca) and, where applicable, to turn said vibration wave via a precession control (Cp) and a control (Cq) to control the quadrature of the wave;
            -- a pair of quadrature compensating transducers (Q+, Q-); controlled via a quadrature control (CTq); and
            -- a pair of stiffness adjusting transducers (Tx, Ty), controlled respectively via a stiffness control (CTx) along the axis x and a stiffness control (CTy) along the axis y, forming a stiffness control (CTf);

    the resonator (Res) having a stiffness matrix $K_C$ in the sensor frame of reference and a stiffness matrix $K_O$ in the wave frame of reference;
    the method for calibrating applying when the inertial sensor is opertaing with a vibration wave (OV) vibrating in the direction x';
    the method for calibrating comprising the steps of:

        - **A** determining the electrical angle ($\theta_k$, $\theta$ (t));
        - **B** retrieving at least one term from the stiffness matrix Ko in the wave frame of reference x'y', able to be a term of quadrature $K_O(2,1)$ or a term of stiffness $K_O(1,1)$, said term being in the form of a sum of cos($i\theta$) and sin($i\theta$) functions, i is an integer varying between 1 and n, n being greater than or equal to 1;
        the steps **A** and **B** being reiterated either for a plurality of electrical angles ($\theta_k$), where k is an integer varying between 1 and m, m being greater than or equal to 2, or for a duration (T) during which the vibration wave (OV) continuously turns at an electrical angle ($\theta$(t)) which varies depending on time (t); then

        - **C** determining the amplitudes of the cos($i\theta$) and sin($i\theta$) functions; and
        - **D** determining the difference in stiffness ΔK, respectively the quadrature Kxy, from the determined amplitudes.

2.  Method for calibrating according to claim 1, the electrical angle describing a plurality of electrical angles ($\theta_k$) where k is an integer varying between 1 and m, m being greater than or equal to 2, the step **C** of determining amplitudes comprising the application of a least-squares filter to the retrieved term, the quantity (m) of electrical angles ($\theta_k$) being at least equal to the number of amplitudes to be determined.

3.  Method for calibrating according to claim 1, the vibration wave (OV) continuously turning at an electrical angle ($\theta$(t)) varying according to time (t) for a duration (T), the step **C** of determining amplitudes comprising the cos($i\theta$) and sin($i\theta$) demodulation of the term retrieved for each i varying between 1 and n, so as to determine the amplitudes of the cos($i\theta$) and sin($i\theta$) functions; and

    - the step **D** of determining the difference in stiffness ΔK, respectively the quadrature Kxy, is carried out from the determined amplitudes.

4.  Method for calibrating according to one of claims 1 to 3 wherein the inertial sensor operates in gyrometer mode, the electrical angle ($\theta_k$, ($\theta$(t)) detyermined in step **A** being equal to an imposed angle ($\theta_{k\_imp}$, ($\theta$(t)$_{imp}$) via the precession control (Cp).

5. Method for calibrating according to one of claims 1 to 3 wherein the inertial sensor operates in gyroscope mode, the electrical angle ($\theta_K$, ($\theta(t)$) resulting from a rotation of the inertial sensor being measured by said inertial sensor, potentially supermposed on a precession control (Cp), the electrical angle detemined in step **A** being equal to said measured angle of rotation ($\theta_{k\_m}$, ($\theta(t)_m$).

6. Method for calibrating according to any of claims 1 to 5, further comprising an additional step of:

- **E** applying a stiffness control (CTf), respectively a quadrature control (CTq), from the difference in stiffness $\Delta K$, respectively of the quadrature Kxy, determined in step **D**.

7. Method for calibrating according to claim 6, the steps **A** to **E** able to be included in a closed-loop servo-system or able to be implemented in an open loop iteratively, preferably twice.

8. Inertial angular sensor (10) comprising a resonator (Res) extending around two mutually perpendicular axes x and y defining a sensor frame of reference xy and comprising:

- at least one vibrating mobile mass (M1), said at least one mobile mass comprising at least two portions configured to vibrate in phase opposition to one another at a vibration pulsation ($\omega$) and in a direction x' defining a wave frame of reference x'y', the vibration wave (OV) in the direction x' making an electrical angle (0) with respect to the axis x;
- a plurality of electrostatic transducers controlled by electrical voltages and operating along the two axes x and y, of which at least:

- a pair of transducers for detecting (Dx, Dy) configured to detect the movements of the vibration wave along the axis x and the axis y;

-- a pair of transducers for exciting (Ex, Ey) to which excitation forces are applied respectively along the axis x and the axis y, via a plurality of excitation controls determined by servo-systems from detected movements, configured to keep the wave at a constant amplitude via an amplitude control (Ca) and, where applicable, to turn said vibration wave via a precession control (Cp) and a control (Cq) to control the quadrature of the wave;
-- a pair of quadrature compensating transducers (Q+, Q-), controlled via a quadrature control (CTq); and
-- a pair of stiffness adjusting transducers (Tx, Ty), controlled respectively via a stiffness control (CTx) along the axis x and a stiffness control (CTy) along the axis y, thus forming a stiffness control (CTf), the resonator (Res) having a stiffness matrix $K_C$ in the sensor frame of reference and a stiffness matrix $K_O$ in the wave frame of reference;

the inertial angular sensor further comprising:

- a means of determining the electrical angle ($\theta_k$, $\theta(t)$);
- a means for retrieving at least one term from the stiffness matrix $K_O$ in the wave frame of reference x'y', able to be a quadrature term $K_O(2,1)$ or a stiffness term $K_O(1,1)$; and
- a processing unit (UT) configured to implement at least the steps **A** to D, and possibly the step **E,** of the method for calibrating chosen according to any of claims 1 to 7;

the stiffness adjusting transducers (Tx, Ty), respectively for compensating the bias in quadrature (Q+, Q-), being configured to apply said stiffness control (CTf), respectively said quadrature control (CTq), to the resonator.

9. Initial angular sensor (10) according to claim 8, said initial sensor being axisymmetric.

10. Inertial angular sensor (10) according to claim 8 or claim 9, comprising at least two vibrating mobile masses (M1, M2) forming the at least two portions configured to vibrate in phase opposition to one another, a mobile mass able to be arranged around another mobile mass.

11. Method for measuring an angular speed or an angular orientation of a holder whereon is arranged an inertial sensor (10) according to one of claims 8 to 10, the method of measuring comprising:

- calibrating said inertial sensor implementing the method of calibrating (100) chosen according to any of claims 1 to 7; and
- measuring the angular speed or the angular orientation, the inertial sensor being used in gyrometer mode or in gyroscopic mode.

FIG.1

FIG.2

FIG.3

FIG.4

FIG. 5

FIG. 6

100

$\theta(t)$

déterminer angle électrique $\theta(t)$ — A

récupérer le terme de quadrature $K_O(1,2)$ de la matrice de raideur $K_O$ dans le repère onde $x'y'$ — B

démoduler le terme de quadrature $K_O(1,2)$ en $\cos i\theta$ et $\sin i\theta$ la démodulation incluant un filtre passe-bas — C

constantes $\alpha_{ci}$, $\alpha_{si}$

déterminer l'écart de raideur $\Delta K$ à partir des constantes $\alpha_{ci}$, $\alpha_{si}$ — D

appliquer un trimming de raideur Ktx, Kty en fonction de l'écart de raideur $\Delta K$ déterminé — E

FIG. 7

100

$\theta(t)$

déterminer angle électrique ($\theta(t)$) — A

récupérer le terme de raideur $K_O(1,1)$ de la matrice de raideur $K_O$ dans le repère onde $x'y'$ — B

démoduler le terme de raideur $K_O(1,1)$ en $\cos i\theta$ et $\sin i\theta$ la démodulation incluant un filtre passe-bas — C

constantes $\alpha_{ci}$, $\alpha_{si}$

déterminer l'écart de quadrature Kxy à partir des constantes $\alpha_{ci}$, $\alpha_{si}$ — D

appliquer un trimming de quadrature Kq en fonction de l'écart de quadrature Kxy déterminé — E

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2960625 A

- US 20060020409 A1

**Littérature non-brevet citée dans la description**

- **ERDINC TATAR et al.** *Journal of Microelectromechanical Systems*, vol. 21 (3)

- A new silicon axisymetric Gyroscope for Aerospace Applications. **VERCIER N et al.** 2020 DGON inertial sensors and systems (ISS). IEEE, 2020